(19) Europäisches Patentamt
European Patent Office
Office européen des brevets

(11) **EP 4 412 151 A1**

(12) **EUROPEAN PATENT APPLICATION**

(43) Date of publication:
**07.08.2024 Bulletin 2024/32**

(21) Application number: **23315023.4**

(22) Date of filing: **06.02.2023**

(51) International Patent Classification (IPC):
***H04L 9/32*** *(2006.01)*

(52) Cooperative Patent Classification (CPC):
**H04L 9/3218; H04L 9/3073**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Zama SAS**
**75008 Paris (FR)**

(72) Inventor: **Libert, Benoît**
**75008 Paris (FR)**

(74) Representative: **DeltaPatents B.V.**
**Fellenoord 370**
**5611 ZL Eindhoven (NL)**

(54) **CRYPTOGRAPHIC METHOD FOR DEMONSTRATING A VECTOR IS BINARY**

(57) Some embodiments are directed to demonstrating by a prover to a verifier that a main vector is a binary vector using a vector commitment scheme. The demonstrating may comprise a main commitment to the main vector and generating a first proof demonstrating that a further vector comprising the product of a randomizing vector and the main vector minus 1 in each component is orthogonal to the main vector.

Fig. 2

**Description**

**TECHNICAL FIELD**

The presently disclosed subject matter relates to a cryptographic method for demonstrating by a prover to a verifier that a main vector is a binary vector, a cryptographic method for verifying by a verifier a proof, a system, a computer storage medium,

**BACKGROUND**

A commitment scheme commits the sender, e.g., the prover or committer, to a secret message that remains secret until the commitment is opened. In a non-interactive commitment, the commitment and the opening phase may each comprise a single message from the committer to the verifier. A commitment scheme has two properties called *hiding* and *binding.* The former means that a commitment string C reveals no information about the committed message. The latter means that no adversary should be able to compute a commitment that can be opened for two distinct messages.

An example of a commitment scheme is the Pedersen commitment. In a cyclic group $\mathbb{G}$ or prime order $p$ with generators $g, h \in \mathbb{G}$, the sender commits to a message $m \in \mathbb{Z}_p$ by choosing $r \xleftarrow{R} \mathbb{Z}_p$ and computing $C = g^m \cdot h^r$, for a random $r \xleftarrow{R} \mathbb{Z}_p$. In the opening phase, the sender reveals m and $r.$ The commitment $C$ perfectly hides m thanks to the uniform randomness $r \in \mathbb{Z}_p$. At the same time, no efficient committer can come up with a commitment $C$ that can be opened in two different ways by revealing distinct pairs $(m,r) = (m',r')$ such that $C = g^m \cdot h^r = g^{m'} \cdot h^{r'}$ unless it can compute the discrete logarithm $\log_g(h)$. The Pedersen commitment naturally extends to commit to vectors of messages $(m_1, \dots, m_n) \in \mathbb{Z}_p$. To this end, the committer needs public parameters containing generators $(g_1, \dots, g_n, h) \in \mathbb{G}^{n+1}$ and computes $C = h^r \cdot \prod_{i=1}^{n} g_i^{m_i}$.

Vector commitments allow a prover to commit to a vector of messages **m** = $(m_1, \dots, m_n) \in D^n$ over some domain D by generating a short commitment string. Later, the committer is able to succinctly reveal individual coordinates of **m**. Here, succinctly means that the partial opening information, also referred to as a proof, should have constant size, e.g., independent of the dimension of the committed vector, yet still convince the verifier that the opened coordinate is correct. As in standard commitments, a vector commitment scheme preferably satisfies two security properties: (i) The *binding* property asserts that no efficient adversary can generate a commitment that can be opened to two different values at the same position $i \in [n]$; and (ii) The *hiding* property which guarantees that revealing a subset of components does not reveal any information about messages at non-revealed positions. Vector commitments enable significant savings in terms of storage, by storing only a constant-size commitment to a vector instead of commitments to individual coordinates, and bandwidth, thanks to the ability to provably and succinctly open individual positions.

Other succinct vector commitments may be based on the RSA assumption, or the Diffie-Hellman-like assumption in pairing-friendly groups.

One limitation of all known vector commitments with short proofs is that there is no efficient way to generate a short proof that the committed vector m is small, e.g., having elements in a given range, e.g., below and/or above a threshold, e.g., binary. One solution to this problem would be to generically use a general-purpose succinct non-interactive argument (SNARK) for all NP languages. While SNARKs could give constant-size proofs, they would require representing the statement as an arithmetic circuits. Then, the arithmetic circuit would have to compute the opening algorithm (and thus compute an exponentiation in a group (G) of the commitment scheme, which would result in a complex arithmetic circuit. In turn, this would require a large common reference string (CRS) and make the proof generation very expensive since, in pairing-based SNARKs that give the smallest proof size, the CRS size and the computational cost of the prover both grow at least linearly with the number of multiplication gates in the arithmetic circuit.

**SUMMARY**

There is a desire to have an improved method for demonstrating by a prover to a verifier that a main vector is a binary vector. A demonstrating method, verifying method, system and computer-readable medium is described in the accompanying claims. Specific embodiments of the invention are set forth in the dependent claims. In an embodiment, a commitment is computed for the main vector. The prover may then demonstrate the binarity by showing that an auxiliary vector is orthogonal with the main vector, e.g., by showing that their dot product is zero. The auxiliary vector comprises a Hadamard product of the main vector and a randomizing vector. The proof can be verified against the main commitment and a first auxiliary commitment. The first auxiliary commitment may be computed for the auxiliary vector, though in reverse order as the main vector.

A second proof may be computed to show that the first auxiliary commitment was indeed computed for a Hadamard product of the main vector and the randomizing vector, in reverse order. The second proof may be obtained by aggregating randomized openings for vector elements, in the main and first auxiliary commitments.

An advantage of the embodiments is that the main commitment, the auxiliary commitment, the first proof and the second proof each have a size which is independent on the dimension of the main vector.

In an embodiment, the main commitment is computed by evaluating a commitment function of the vector commitment scheme directly for the main vector. This is not strictly necessary, for example, using a vector commitment scheme with an additive homomorphic property the commitment function could be applied to any linear combination of the main vector and a vector known to the verifier. For example, a main commitment may be alternatively computed by evaluating the commitment function to the sum of the main vector and a vector known to the verifier. The verifier may obtain the former directly applied commitment from the alternative commitment and the known vector Applying the commitment function to the main vector itself is typical though.

Likewise, for the auxiliary commitment, a commitment function may be applied to any linear combination of the auxiliary vector and a public vector, in particular the randomization vector. Two typical choices are to apply the commitment function to the auxiliary vector directly, or to auxiliary vector minus the randomization vector; in an embodiment one of these two options is computed by the prover and shared with the verifier, while the verifier computes the other commitment itself.

For convenience most of the embodiments described in detail herein will assume the main commitment is obtained by applying a commitment function to the main vector, and the auxiliary commitment by applying a commitment function to the auxiliary vector, but other choices can be made in this respect.

Proofs and commitments may be represented as group elements. A bilinear map may be defined between a first and second group. The reverse order has the effect that a dot product of two vectors will be computed in the exponent when the bilinear map is applied to corresponding commitments, in the first and second group respectively. This may be applied to the main commitment and an auxiliary commitment. This may be the auxiliary commitment computed by the prover, or a second auxiliary commitment. The second auxiliary commitment can be computed from the first auxiliary commitment, e.g., using an additive homomorphic property of the vector commitment scheme.

In an embodiment, the scheme to prove binarity of a vector is zero-knowledge and/or non-interactive.

Proving the binarity of a vector can be applied in many situations. For example, it may be used in demonstrating that a committed number is smaller than a threshold, demonstrating the validity of a ring LWE ciphertext, demonstrating a vector x is ternary.

In an embodiment, a system, e.g., a device, is configured for the demonstrating and/or verifying method.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1 schematically shows an example of an embodiment of a demonstrating system,
Figure 2 schematically shows an example of an embodiment of a proving system,
Figure 3 schematically shows an example of an embodiment of a proving method,
Figure 4a schematically shows a computer readable medium having a writable part comprising a computer program according to an embodiment,
Figure 4b schematically shows a representation of a processor system according to an embodiment.

Reference signs list

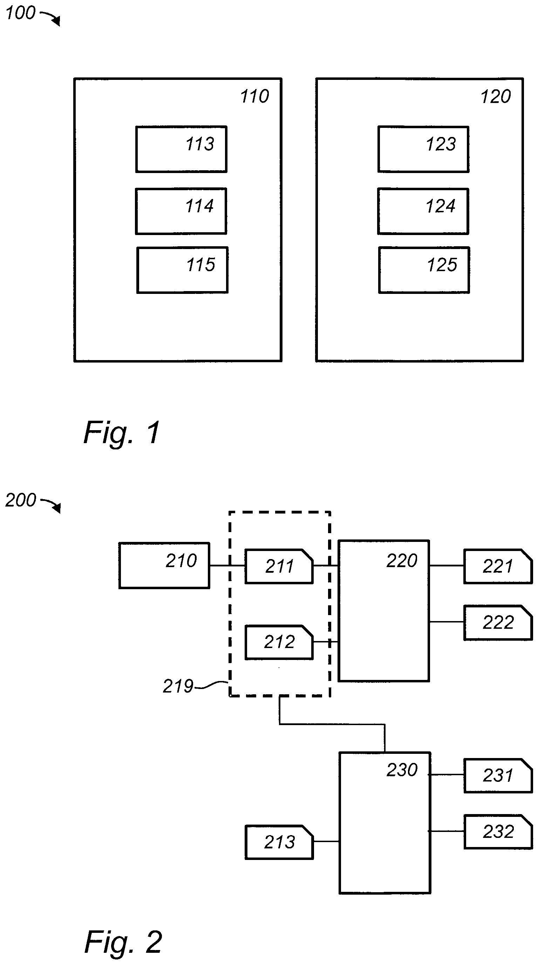

The following list of references and abbreviations corresponds to figures 1, 2, 3, 4a, and 4b, and is provided for facilitating the interpretation of the drawings and shall not be construed as limiting the claims.

| 100 | a proving system |
| 110 | a proving device |
| 113 | a processor system |
| 114 | storage |
| 115 | communication interface |
| 120 | a verifying device |
| 123 | a processor system |
| 124 | a storage |
| 125 | a communication interface |
| 200 | a proving system |
| 210 | a main vector source |
| 211 | a main vector |
| 212 | a randomizing vector |
| 213 | a randomizing vector |
| 219 | committed to vectors |
| 220 | a commitment unit |
| 221 | a main commitment |
| 222 | a first auxiliary commitment |
| 230 | a proving unit |
| 231 | an orthogonality proof |
| 232 | an equality proof |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1** schematically shows an example of an embodiment of a proving device 110 and of an embodiment of a verifying device 120. Proving device 110 and verifying device 120 may be part of a proving system 100.

Proving device 110 is configured to demonstrate cryptographically to a verifying device that a vector is a binary vector using a vector commitment scheme. The vector commitment scheme comprises at least one commitment function taking as input a vector and producing a commitment as output. Vector commitment schemes may comprise more than one, e.g., two commitment functions each taking as input a vector and producing a commitment as output, however, the commitment values are produced in different groups. For example, a first commitment function may produce a group element in a first group, while a second commitment function may produce a group element in a second group. A bilinear map may be defined between the first and second group. A vector commitment scheme may have additional properties, e.g., the additive homomorphic property. According to this property, a new commitment may be computed for a sum of a first vector and second vector from the second vector and a commitment of the first vector, without knowing the first vector.

The verifying device 120 is configured to verify the cryptographic demonstration provided by the prover device. The prover device is also referred to as the prover. The verifying device is also referred to as the verifier.

An embodiment of a cryptographic method described herein is particularly advantageous as the size of the cryptographic proofs is independent of the dimension of the vector the binarity of which is being proven. This property is sometimes referred to as succinctness or conciseness, that is the proof is succinct. As the size of proofs is independent of the vector dimension, the size per dimension decreases as the vector dimension increases. Vector could have any length, as an example, an embodiment may be applied to vectors of at least, 10, 100, 1000, 10000 elements, e.g., bits, and so on.

System 100 may be used stand alone, but there are many applications in which proving whether a vector is binary may be used as a primitive. For example, many mathematical objects, e.g., may be expressed as a vector of bits, e.g., as a sequence of bits. The properties of the mathematical object may then be verified by demonstrating properties of the vector, e.g., by revealing one or more bits, by computing an inner product, e.g., dot product, over the vector, or part thereof and proving the result, performing other lines operations, and so on. For good security, the binarity of the vector should also be proven. Otherwise, a prover could attempt to cheat by committing to a non-binary vector.

Discussed in some detail are two specific applications, but many more are possible. For example, proving that a vector is binary may be used to prove that some number, known to the prover, lies in a particular range, e.g., is smaller than some upper bound. To do this, the number is converted to a binary vector, on which then appropriate linear operations can be done, e.g., a most significant bit may be opened; once the verifier is convinced that a committed vector contains the $l$-bit representation of an integer $x$, then the verifier knows that $x$ is smaller than $2^l$.

If the prover could commit to a non-binary vector, then the prover could cheat, making the verifier believe that the prover's number is smaller than the bound when it is not. Another application is in advanced cryptographic systems, such as multi-party computation and homomorphic encryption. In homomorphic encryption. Homomorphic encryption enables complex mathematical operations to be performed on encrypted data without compromising the encryption. Encryption schemes that allow computations to be performed on their encrypted data are known per-se, however, they are subject to some limits. For example, a homomorphic encrypting device may homomorphically encrypt the data. A homomorphic computing device may perform an algorithm, e.g., a software program, an arithmetic procedure, on the data without decrypting it. Existing methods to verify for the homomorphic computing device whether the received data is in fact correctly encrypted data suffer from drawbacks; for example, SNARKs' proofs are very expensive to compute. Using an embodiment, the data may be converted to a binary vector, which may then be used to prove the validity of the homomorphic encrypted data. By using a non-interactive proof that a committed vector is binary, we can obtain a short proof to convince the homomorphic computing device that a ciphertext is well-formed.

Cryptographically demonstrating that a vector is a binary vector may comprise various phases.

In an initializing phase, common parameters are shared between the prover device and the verifying device. Typically, a cryptographic method performs its computation not on the natural numbers but in various finite groups or rings. In the initializing phase, shared parameters are established between prover and verifier. In non-interactive zero-knowledge proofs, a set of trusted public parameters is often generated by a trusted party and made available to the prover and the verifier. Such shared parameters are sometimes referred to as a common reference string (CRS), or public parameters. The shared parameters may be obtained, e.g., generated, by a trusted party and sent to the prover and to the verifier. The shared parameters may be jointly generated, by the prover and the verifier together, possibly with involvement of the trusted party. Note that most embodiments use a trusted party. Preferably, the trusted party erases all its private randomness used to generate the CRS after delivery to the prover and verifier.

Typically, the initialization phase needs to be performed just once. This phase is often implicit. For example, the phase may be performed as part of another cryptographic method executed by the prover and verifier. The parameters of the other cryptographic method may then be used for a demonstrating method according to an embodiment. For example, the shared parameters may be implicitly known, e.g., they may be part of computer software provided at the prover and verifier.

For example, the shared parameters may comprise one or more groups, e.g., a first, second and third group. For example, the shared parameters may comprise a bilinear map, mapping from a first group and a second group to a third group. For example, the shared parameters may comprise a set of generators for said groups, in particular, for the first group and second group.

In a commitment phase, the prover commits to a vector $x = (x_1, ..., x_n)$. The prover computes a commitment according to a commitment scheme from the vector and the shared parameters. A commitment allows the prover to commit to a value, in this case to a vector, while keeping it hidden from others, in particular keeping it secret from the verifier. The commitment is sent to the verifier, this allows the prover to reveal the committed value or part thereof later; this is also referred to as opening the commitment. Commitments may be used for this ability, e.g., avoiding that the prover can change its value, e.g., vector x after the prover committed to it. However, commitments may also be used as part of other demonstrating. For example, in an embodiment the prover demonstrates to the verifier that the vector that is committed to is binary, without necessarily opening any part of the vector.

The commitment phase may comprise the computation of one or more commitments, but also the computation of one or more proofs; for example, proof that the committed to vector(s) have certain properties. The commitment(s) and proofs are shared with the verifier, e.g., sent to the verifier, e.g., over a computer network. Computing proofs and commitments may be separated to their own phases, e.g., a commitment phase and a proof phase.

In a verification phase, the verifier may verify for example, that the proofs supplied with the commitment are correct. Interestingly, this allows a prover to prove facts about a vector without revealing anything else about said vector. This so-called zero knowledge property is particularly desirable in cryptography.

For example, in the commitment phase, the proving device may compute a main commitment to commit to a particular vector at interest, e.g., the main vector. The commitment might allow the prover to later reveal one or more values of the main vector. The verifier could then verify that the commitment indeed corresponds to the revealed values. Interestingly, the proving device may also compute one or more proofs, demonstrating properties of the main vector. Such proofs can also be verified using the commitment. For example, the proving device may prove that the main vector and a vector defined by $(y_1(x_1 - 1), ..., y_n(x_n - 1))$ are orthogonal; the vector $y = (y_1, ... , y_n)$ randomizes this sum.

To aid this proof, the proving device may compute one or more auxiliary commitments, that commit to other vectors related to the main vector. For example, an auxiliary commitment may be to the Hadamard product of the main vector and the randomizing vector. It was an insight of the inventor that reversing the order of this vector allows the subsequent verification to use a bilinear map. The proving device may generate further proofs. For example, the proving device may prove that the main commitment defined above, and the one or more auxiliary commitment(s) were actually obtained from the same main vector.

Main commitment and the auxiliary commitment are typically obtained by applying a commitment function of the vector commitment scheme to the main vector and auxiliary vector respectively. This typical case is assumed in most embodiments. However, a homomorphic property of the commitment scheme makes this not necessary, though; given a valid commitment a verifier can use the homomorphic property to derive additional commitments. This is especially useful for the auxiliary commitment. The auxiliary commitment may be obtained by applying a commitment function of the vector commitment scheme to the auxiliary vector, but also by applying the commitment function to the auxiliary vector minus the randomization vector. In the former case, the verifier may deriver the latter commitment; in the latter case, the verifier may derive the former commitment.

The ability to demonstrate that a vector is binary without necessarily revealing the full vector itself, is useful in many situations. Generally a mathematical object may be encoded as a binary vector, e.g., as a sequence of bits. Properties of the mathematical object may then be demonstrated by, e.g., by opening particular elements of the vector, computing dot-products over the vector or parts thereof, computing other operations, possibly linear operations on the vector. However, for this approach to have good security, the verifier should be convinced that the vector is binary. For example, to prove that a number known to the prover falls in a particular range, e.g., is smaller than an upper bound, the prover could encode the number as a binary vector and commit to it. By opening the last $(n - l)$ elements of the binary vector to zero, e.g., the $(n - l)$ most significant bits, using a constant-size, e.g., succinct, proof, the prover can prove that the integer is smaller than $2^l$. However, if the prover could cheat by committing to a non-binary vector, it would appear that the number is smaller than the bound, while it is not.

Another application is as a primitive in other cryptographic schemes in which data is shared in encrypted form, while still operations are performed on the data, e.g., homomorphic encryption. For example, data may be homomorphically encrypted by a homomorphic encryption device. The data may then be sent to a homomorphic computation device. The homomorphic computation device performs a computation on the encrypted data, without decrypting the data, e.g., without gaining knowledge of the plaintext of the data. The computation results, still encrypted, may be sent back to the encrypting device. There the encrypted computation results may be decrypted. Homomorphic encryption relies on the data being correctly provided according to the specific rules of the particular homomorphic encryption scheme. The computation device typically cannot verify whether the data has been correctly encrypted, e.g., because it cannot decrypt the data. Interestingly, using an embodiment this is possible. The encrypting device may convert the data and/or encryption randomness into a binary vector, then prove that the provided encrypted data correctly reflects the plain data according to the rules. Again this relies on being able to efficiently prove that the vector is binary.

Proving device 110 may comprise a processor system 113, a storage 114, and a communication interface 115. Verifying device 120 may comprise a processor system 123, a storage 124, and a communication interface 125. Storage 114 and 124 may be, e.g., electronic storage, magnetic storage, etc. The storage may comprise local storage, e.g., a local hard drive or electronic memory. Storage 114 and 124 may comprise non-local storage, e.g., cloud storage. In the latter case, storage 114 and 124 may comprise a storage interface to the non-local storage Storage may comprise multiple discrete sub-storages together making up storage 114, 124. Storage may comprise a volatile writable part, say a RAM, a non-volatile writable part, e.g., Flash, a non-volatile non-writable part, e.g., ROM.

In the various embodiments of communication interfaces 115, and/or 125, the communication interfaces may be selected from various alternatives. For example, the interface may be a network interface to a local or wide area network, e.g., the Internet, a storage interface to an internal or external data storage, an application interface (API), etc.

Storage 114 and 124 may be non-transitory storage. For example, storage 114 and 124 may store data in the presence of power such as a volatile memory device, e.g., a Random Access Memory (RAM). For example, storage 114 and 124 may store data in the presence of power as well as outside the presence of power such as a non-volatile memory device, e.g., Flash memory.

The devices 110 and 120 may communicate internally, with each other, with other devices, external storage, input devices, output devices, and/or one or more sensors over a computer network. The computer network may be an internet, an intranet, a LAN, a WLAN, etc. The computer network may be the Internet. The devices 110 and 120 comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 115 may be used to send or receive digital data, e.g., commitments and proofs, vectors, e.g., binary vectors. The communication interface 125 may be used to send or receive digital data, e.g., commitments and proofs.

Proving device 110 and verifying device 120 may have a user interface, which may include well-known elements such as one or more buttons, a keyboard, display, touch screen, etc. The user interface may be arranged for accommodating user interaction for initiating a cryptographic protocol. The user interface may be arranged for a higher level protocol, e.g., initiating a homomorphic computation, e.g., a neural network evaluation, on encrypted data. As part of the higher level protocol, a vector may be generated along with a proof that the vector is binary. Other properties of the vector may be demonstrated with proofs as well, e.g., that the encrypted data is validly encrypted according to the homomorphic encryption scheme. A user interface is optional, as proving device and verifying device could operate automatically.

The execution of devices 110 and 120 may be implemented in a processor system. The devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, the proving device 110 and verifying device 120 each comprise a microprocessor which executes appropriate software stored at the device; for example, that software may have been downloaded and/or stored in a corresponding memory, e.g., a volatile memory such as RAM or a non-volatile memory such as Flash.

Instead of using software to implement a function, the devices 110 and/or 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, proving device 110 and verifying device 120 may comprise circuits, e.g., for cryptographic processing, and/or arithmetic processing.

In hybrid embodiments, functional units are implemented partially in hardware, e.g., as coprocessors, e.g., cryptographic and/or mathematical coprocessors, and partially in software stored and executed on the device.

**Figure 2** schematically shows an example of an embodiment of a proving system 200.

Proving system 200 is configured to implement a cryptographic method for demonstrating by a prover to a verifier that a main vector 211, $\mathbf{x} = (x_1, \ldots, x_n)$ is a binary vector using a vector commitment scheme. For example, system 200 could be implemented in device 110.

Main vector 211 may be obtained from a main vector source 210. Typically, main vector source 210 may be part of a further cryptographic method. For example, a cryptographic object may be converted to a binary vector. By proving properties of the vector, the properties may be efficiently demonstrated to a verifier. An embodiment may be used to prove efficiently that the main vector is binary. The main vector may also be obtained, e.g., from storage or received from a third party.

In addition to the main vector, various further vectors may be used, e.g., to randomize or aggregate computations into a single value. Shown is randomizing vector 212 and randomizing vector 213. Typically, a randomizing vector is not secret, and is available or made available to the verifier by the prover. In principle, an agreement scheme between prover and verifier may be adapted to select the randomizing vectors. Preferably the randomizing vectors are selected by the prover system, as this allows a non-interactive scheme. To avoid that a dishonest prover has undue control over the randomization, a randomizing vector is may be generated from a hash value, e.g., by applying a cryptographic hash function to data comprising one or more previous protocol parts, e.g., one or more of previously obtained vectors, commitments, proofs, and the like. This has the additional advantage that a verifier can generate the randomizing vectors themselves without having to receive them, thus reducing transmission costs.

In an embodiment, randomization vectors are chosen by the verifier or derived from the output of a hash function, e.g., applied to previously computed commitments. Security is improved if the prover cannot choose the randomization vector before committing to the vector. Generating the randomization vector from a hash function achieves that.

The randomization vectors, e.g., the hash functions, may be modeled as random oracle. This is not necessary, but convenient for proving mathematical properties.

One or more of the randomizing vectors may be used in computing auxiliary commitments, although some may not be. This is indicated in figure 2, as randomizing vector $y = (y_1, \ldots, y_n)$, 212 is an input to a commitment unit 220, whereas randomizing vector $t = (t_1, \ldots, t_n)$, 213 is not. Both randomizing vector 212 and randomizing vector 213 may be obtained by hashing a previous commitment, e.g., commitments 221, 222, discussed below.

Proving system 200 comprises a commitment unit 220 configured to compute vector commitments. Shown in figure 2 is a main commitment 221. The main commitment commits to the main vector $\mathbf{x}$, 211. Later the prover could choose to open all or part of vector 211, and a verifier could verify that the opened part is indeed the same as the main vector 211 when the commitment 221 was computed.

Commitment unit 220 may be used to compute further commitments that help in constructing later proofs. For example, commitment unit 220 is used to compute a first auxiliary commitment 222. The auxiliary commitment is not to randomizing vector 212 directly, as the verifier has access to vector 212, e.g., can generate it by itself. However, first auxiliary commitment 222 may be to the Hadamard product of the main vector ($\mathbf{x}$) and the randomizing vector ($\mathbf{y}$), with elements $x_i y_i$. It was an insight that having an opposite order in which the main commitment 221 and the auxiliary commitment 222 commitments are computed allows efficient verification using a bilinear map. The first auxiliary commitment 222 is in a reverse order as the order of the main vector. For example, the main commitment may commit to the vector $\mathbf{x} = (x_1, \ldots, x_n)$, whereas the first auxiliary commitment 222 may commit to the auxiliary vector in the reverse order, e.g., to the $(y_n x_n, \ldots, y_1 x_1)$. Note that the order in which the main vector is used in main commitment and the auxiliary commitment is reversed. In this example, the main commitment uses the natural order of the main vector, e.g., the order in which the main vector was received or generated, while the auxiliary vector reverse the order in which the main vector elements are used. However, this could be reversed, the main commitment could reverse the natural order, while the auxiliary reverses this, that is, uses the natural order again.

In an embodiment, the vector commitment scheme is homomorphic, e.g., additive homomorphic. This has the consequence that a verifier can construct additional commitments given the received commitments, e.g., the main and first auxiliary commitment. For example, the verifier may compute a second auxiliary commitment from the first auxiliary commitment for a further vector, $(y_n x_n - y_n, \ldots, y_1 x_1 - y_1)$ given that the verifier has the randomizing vector 212.

Furthermore, the vector commitment scheme is preferably arranged to allow a partial opening for an element ($x_i$) at a position ($i \in [n]$) of a vector. This allows the constructions of proofs by computing a product and/or division of proofs ranging over the indices in corresponding vectors, e.g., the main vector and/or the auxiliary vector.

For example, the vector commitment scheme may be a Pedersen commitment scheme.

Proving system 200 further comprises a proving unit 230. Proving unit 230 is configured to generate proofs for statement about vectors that can be verified using commitment for said vectors, without requiring knowledge of the vectors themselves.

Proving unit 230 may be used to construct orthogonality proof 231, e.g., a first proof $\pi_y$. The orthogonality proof demonstrates to the verifier that the further vector, $(y_1 x_1 - y_1, \ldots, y_n x_n - y_n)$ is orthogonal to the main vector. This shows that the sum $y_1(x_1 - 1)x_1 + \ldots y_n(x_n - 1)x_n = 0$, which means that, with overwhelming probability, each of $x_i$ is either 0 or 1, as the $y_i$ randomize this sum, e.g., the $y_i$ are random, e.g., are chosen independent of the $x_i$. More precisely, if one of the $x_i$ is not in {0,1}, then the probability that the sum equals zero is only $1/p$.

This proof is supplemented by a second proof $\pi_{eq}$, an equality proof 232, that links the main commitment 221 and the first auxiliary commitment 222. For example, the equality proof 232 demonstrates that the main vector in the Hadamard product committed to in the first auxiliary commitment is the main vector committed to in the main commitment. More precisely, the equality proof 232 may demonstrate that the main vector in the Hadamard product committed to in the first auxiliary commitment is the main vector committed to in the main commitment. More precisely, that the first auxiliary commitment is commits to the auxiliary vector in reverse order, that is to the reverse order of the Hadamard product of the main vector (x) and the randomizing vector (y).

Interestingly, the main commitment, the auxiliary commitment, the first proof and the second proof may each have a size which is independent on the dimension of the main vector, that is they are succinct.

The proving system may be further configured to make the commitment and the auxiliary commitment available to the verifier, and making the first proof and/or the second proof or an aggregation thereof available to the verifier. The verifier may verify that the orthogonality proof and/or the equality proof agree with the main and first auxiliary commitment.

Possibly, in a later state additional proofs may be generated by the proving system. For example, the proving system may generate proofs for further properties of the main vector. For example, the main vector may be opened in whole or in part. For example, linear operators may be applied to the main vector and the result may be opened; for example, a dot product with the main vector and another vector may be computed, the another vector may be a known vector. The result of the dot product may be revealed to the verifier and its correctness demonstrated using the main commitment and possibly further auxiliary commitments.

In an embodiment, the commitments and proofs are group elements. For example, a bilinear map $e(,)$ is defined from a first group $\mathbb{G}$ and a second group $\widehat{\mathbb{G}}$ to a third group $\mathbb{G}_T$. A vector commitment and a proof may be an element in one of the first and second groups. Verification of a proof comprising one or more application of the bilinear map to the proof and an expression in the generators of the other group, thus obtaining an element in the third group. Verification of a proof may also comprise one or more application of the bilinear map to commitment(s) and an expression in the generators of a group, or vice versa, thus obtaining an element in the third group. The verification comprises comparing the results of the first and second application in the third group. The vector elements of a vector may also be group elements, e.g., the natural numbers modulo a prime p.

For example, verification of the orthogonality proof 221 may comprise a first application of the bilinear map to the first proof and a generator of the second group $e(\pi_y, \hat{g})$, and a second application of the bilinear map (

$$e(C_y \cdot \prod_{j=1}^{n} g_{n+1-j}^{-y_j}, \hat{C})$$

) to the main commitment and the second auxiliary commitment.

Likewise, the equality proof $\pi_{eq}$ may be verified by comparing applications of the bilinear map to the second proof $e(\pi_{eq}, \hat{g})$, the main commitment $e(\prod_{i=1}^{n} g_{n+1-i}^{t_i \cdot y_i}, \hat{C})$, and the auxiliary commitment $e(C_y, \prod_{i=1}^{n} \hat{g}_i^{t_i})$.

The bilincar map may be applied to products of selected group generators, that are chosen so that the comparison in the third group balances, e.g., equals, if the proof is correct. For example, in case of the equality proof if the main commitment and the first auxiliary commitment both correspond to the same main vector.

The inventor had the insight that embodiment may use any vector commitment over groups $(\mathbb{G}, \widehat{\mathbb{G}}, \mathbb{G}_T)$ equipped with a bilinear map $e: \mathbb{G} \times \widehat{\mathbb{G}} \to \mathbb{G}_T$, where: (i) The common reference string contains generators $(g_1, \dots, g_{n_1}) \in \mathbb{G}^{n_1}$, $(\hat{g}_1, \dots, \hat{g}_{n_2}) \in \widehat{\mathbb{G}}^{n_2}$; (ii) A commitment to a vector $(x_1, \dots, x_n)$ comprises group elements $(C_1, \dots, C_{m_1}) \in \mathbb{G}^{m_1}$, $(\hat{C}_1, \dots, \hat{C}_{m_2}) \in \widehat{\mathbb{G}}^{m_2}$; (iii) A partial opening at position $i \in [n]$ comprises group elements $(\pi_1, \dots, \pi_{\ell_1}) \in \mathbb{G}^{\ell_1}$ and $(\hat{\pi}_1, \dots, \hat{\pi}_{\ell_2}) \in \widehat{\mathbb{G}}^{\ell_2}$ and satisfies a verification of the form

$$\prod_{\tau=1}^{m_1} e(C_\tau, \hat{g}_{\mu_\tau(i)}) \cdot \prod_{\tau=1}^{m_2} e(g_{v_\tau(i)}, \hat{C}_\tau) \cdot \prod_{\tau=1}^{\ell_1} e(\pi_\tau, \hat{g}_{j_\tau}) \cdot \prod_{\tau=1}^{\ell_2} e(g_{k_\tau}, \hat{\pi}_\tau) \cdot g_T^{x_i} = 1_{\mathbb{G}_T}$$

, where $g_T \in \mathbb{G}_T$ is publicly computable from the common reference string; $v1(i), \dots, v_{m_2}(i) \in [n_1]$ and $\mu_1(i), \dots, \mu_{m_1}(i) \in [n_2]$ are functions of the opened index $i \in [n]$; and $j_1, \dots j_{\ell_1} \in [n_2]$, $k_1, \dots, k_{\ell_2} \in [n_1]$ are fixed.

Embodiments are provided that are a special case of the above equation, e.g., where $m_1 = 1$, $m_2 = 0$, $\ell_1 = 1$, $\ell_2 = 0$ and $g_T = e(g_1, \hat{g}_n)$).

These embodiments have various advantages. The common reference string has linear size in the dimension of committed vectors. It supports constant-size proofs that a committed vector $\mathbf{m} \in \mathbb{Z}_p^n$ satisfies inner product relations $\langle \mathbf{m}, \mathbf{t} \rangle = x$ for public $\mathbf{t} \in \mathbb{Z}_p^n$ and $x \in \mathbb{Z}_p$. Furthermore, proofs are short and contain just a few group elements.

For example, an embodiment may be a cryptographic method for demonstrating by a prover to a verifier that a main vector ($\mathbf{x} = (x_1, \dots, x_n)$) is a binary vector using a vector commitment scheme, a bilinear map ($e(,)$) being defined from a first group and a second group $(\mathbb{G}, \widehat{\mathbb{G}})$ to a third group $(\mathbb{G}_T)$, a vector commitment being an element in one of the first and second groups $(\widehat{\mathbb{G}}; \mathbb{G})$,

- computing by a prover a main commitment ($\hat{C}; C$), the first commitment committing to the main vector ($x$),
- obtaining by the prover a randomizing vector ($\mathbf{y} = (y_1, \dots, y_n)$), the randomizing vector being made available to the verifier,

- computing by the prover a first auxiliary commitment ($C_y$; $\hat{C}_y$), the first auxiliary commitment committing to, in reverse order, to an auxiliary vector comprising, a Hadamard product of the main vector (**x**) and the randomizing vector (**y**),
- generating a first proof ($\pi_y$) demonstrating that a further vector comprising the product of the randomizing vector and the main vector minus 1 in each component ($y_i(x_i - 1)$) is orthogonal to the main vector ($x_i$), the first proof being arranged for verification by a verifier.

The first proof may be obtained as a proof that a dot product of two vectors is zero. The reason for reversing the order of the Hadamard product of the main vector (**x**) and the randomizing vector (**y**) makes it possible to verify the proof with the bilinear map. The bilinear map of the main commitment and the auxiliary commitment will compute a product of polynomials in the exponent. In the product, one of the coefficient will be the dot product of the two vectors.

For example, if $\hat{C} = \hat{g}^{\gamma + \Sigma_j x_j \alpha^j}$ and $C_y = g^{\gamma + \Sigma_j z_j \alpha^j}$, then the pairing $e(C_y, \hat{C})$ computes a product of polynomials in the exponent. In the product, the coefficient of $\alpha^{n+1}$ becomes $\sum_{i=1}^{n} x_i z_{n+1-i}$. If the order of the $z_j$ is reversed in the commitment the inner product $< x, z >$ is obtained as the coefficient of $a^{n+1}$.

For example, an embodiment may be a cryptographic method for verifying by a verifier that a main vector (**x** = ($x_1$, ...,$x_n$)) is a binary vector, comprising

- verification of the first proof comprising a first application of the bilinear map to the first proof and a generator of the second group ($e(\pi_y, \hat{g})$), verification further comprising obtaining a second auxiliary commitment ($C_y \cdot \prod_{j=1}^{n} g_{n+1-j}^{-y_j}$) from the first auxiliary commitment for the further vector, verification of the first proof comprises a second application of the bilinear map ($e(C_y \cdot \prod_{j=1}^{n} g_{n+1-j}^{-y_j}, \hat{C})$) to the main commitment and the second auxiliary commitment, the verification comprises comparing the results of the first and second application in the third group.

Embodiments may be implemented as non-interactive zero-knowledge (NIZK) proof system. Such a proof system typically comprises the algorithms (CRS - Gen, Prove, Verify).

The CRS - Gen algorithm may be used in an initialization phase for example. On input of a security parameter $\lambda \in \mathbb{N}$ and (optionally) other parameters, CRS - Gen generates a common reference string pp and optionally a simulation trapdoor $\tau$; Algorithm Prove takes as input the common reference string pp, a statement $x$ and a witness $w$ and outputs a proof $\pi$; Verify takes as input pp, a statement $x$ and a proof $\pi$ and returns 0 or 1. Correctness requires that honestly generated proofs are always (or at least with overwhelming probability) accepted by the verifier. However, in an embodiment, an additional algorithm Com is introduced that inputs a vector $\mathbf{x} \in D^n$ over a domain $D$ and outputs a commitment $C$. For example, The prover algorithm may be used in a proof phase, while the Com algorithm may be used in a commitment phase.

Below several further optional refinements, details, and embodiments are illustrated.

For a message space $\mathbb{Z}_p^n$, for a prime modulus $p$, embodiments generate succinct proofs for committed vectors. In an embodiment, it may be allowed to use a message space modulo a composite number, e.g., a hard to factor composite number. However, bilinear maps are less efficient in such case. Accordingly, it will be assumed herein that messages are modulo a prime $p$.

Embodiments allow committing to a vector **x** of small infinity norm or even a binary $\mathbf{x} \in \{0,1\}^n$ and obtain a constant-size commitment $C$. Subsequently, it is possible to generate a short proof that **x** has binary entries. In an embodiment, the proof comprises just two group elements. In particular, CRS may be of $O(n)$-size, and it is possible to succinctly open the commitment for individual vector positions. It is also possible to prove that a committed vector $\mathbf{x} \in \mathbb{Z}_p$ satisfies a linear equation $\langle \mathbf{x}, \mathbf{t} \rangle = s$ for a public $\mathbf{t} \in \mathbb{Z}_p^n$ and a public $s \in \mathbb{Z}_p$. Furthermore, it has aggregation properties that make it possible to generate a constant-size proof for a sub-vector opening. These properties allow a succinct proving of various properties of committed vectors. An embodiment adds the important additional property of being able to prove binarity of vectors. For example, the aggregation scheme of Gorbunov, et al. "Pointproofs: Aggregating Proofs for Multiple Vector Commitments" may be used.

For the purpose of describing a number of detailed embodiments, let $(\mathbb{G}, \hat{\mathbb{G}}, \mathbb{G}_T)$ be cyclic groups of order $p$

that are equipped with a bilinear map, also referred to as a pairing, $e: \mathbb{G} \times \widehat{\mathbb{G}} \to \mathbb{G}_T$. A bilinear map has the property that $e(g^a, \hat{g}^b) = e(g, \hat{g})^{ab}$ for all $a, b \in \mathbb{Z}$, and is non-degenerate, e.g., $e(g, \hat{h}) = 1_{\mathbb{G}_T}$ iff $\hat{h} = 1_{\widehat{\mathbb{G}}}$ or $g = 1_{\mathbb{G}}$. Security relies on the hardness of computing a discrete logarithm $\alpha \subset \mathbb{Z}_p$ given $\{g^{\alpha^i}\}_{i \in [2n]}$ and $\{\hat{g}^{\alpha^i}\}_{i \in [n]}$. Security is improved by choosing a sufficiently large group order $p = |\mathbb{G}| = |\widehat{\mathbb{G}}| = |\widehat{\mathbb{G}}_T| > 2^{l(\lambda)}$, for some function $l: \mathbb{N} \to \mathbb{N}$ of the security parameter $\lambda$. For example, for $\lambda = 128$, one might select a prime $p > 2^{256}$.

Preferably, the groups $(\mathbb{G}, \widehat{\mathbb{G}}, \mathbb{G}_T)$ are asymmetric bilinear groups of prime order $p$. Note that techniques are known to convert symmetric bilinear groups to asymmetric bilinear groups. For integers $m, n$, the $(m, n)$-Discrete Logarithm $((m, n)$-DLOG) problem is, given

$$(g, g^\alpha, g^{(\alpha^2)}, \dots, g^{(\alpha^m)}, \hat{g}, \hat{g}^\alpha, \dots, \hat{g}^{(\alpha^n)})$$

where $\alpha \xleftarrow{R} \mathbb{Z}_p, g \xleftarrow{R} \mathbb{G}, \hat{g} \xleftarrow{R} \widehat{\mathbb{G}}$, to compute $\alpha \in \mathbb{Z}_p$.

In a practical embodiment, $\mathbb{G}$ and $\widehat{\mathbb{G}}$ may be instantiated from suitable elliptic curves groups while $\mathbb{G}_T$ may be a subgroup of the group of invertible elements in a finite field. Examples of such groups are known in the art. See for example the papers by E. Kachisa, E. Schaefer, and M. Scott, "Constructing Brezing-Weng pairing-friendly elliptic curves using elements in the cyclotomic field."; D. Aranha, Y. El Housni, and A. Guillevic, "A survey of elliptic curves for proof systems."; Y. El Housni and A. Guillevic, "Optimized and secure pairing friendly elliptic curves suitable for one layer proof composition."

In the art, three types of pairings are sometimes distinguished. In Type-1 pairings, we have $\widehat{\mathbb{G}} = \mathbb{G}$. In Type-2 and Type-3 pairings, we have $\widehat{\mathbb{G}} \neq \mathbb{G}$ and they differ in that Type-2 pairings admit an efficiently computable isomorphism $\psi: \widehat{\mathbb{G}} \to \mathbb{G}$, though not in the converse direction, whereas no such isomorphism is known for Type-3 pairings. Type-3 pairings offer the most efficient configuration. For increased security, preferably one uses either a Type-2 or Type-3 pairings, and preferably not a Type-1 pairing. See, for example, the paper by Steven D. Galbraith, et al., "Pairings for cryptographers".

**Vector commitments**

In an embodiment, a vector commitment allows committing to a vector of scalars $(m_1, \dots, m_n) \in \mathbb{Z}_p^n$ using a constant-size, e.g., $C = g^\gamma \cdot \prod_{j=1}^n g_j^{m_j} \in \mathbb{G}$ in such a way that the committer can open $C$ for an individual position $i \in [n]$ by revealing just $m_i$ and a short element $\pi_i$ whose size is independent of the dimension n. More information may be obtained from the paper by B. Libert and M. Yung, "Concise Mercurial Vector Commitments and Independent Zero-Knowledge Sets with Short Proofs". Note that it was not known that such schemes could enable short proofs of binarity. Note, that in the context of a bilinear map, a vector commitment could be computed in either of first or second group. Furthermore, it is permitted to use vector commitment schemes that compute multiple group elements instead of a single element, or to use a different suitable vector commitment schemes.

In a vector commitment scheme, the structured common reference string (SRS) contains group elements of the form ($g, \{g_i = g^{(\alpha^i)}\}_{i \in [2n] \setminus \{n+1\}}$) and ($\hat{g}, \{\hat{g}_i = \hat{g}^{(\alpha^i)}\}_{i=1}^n$). In this embodiment, the element $g_{n+1} = g^{(\alpha^{n+1})}$ is not publicly available. The sender commits to $\mathbf{m} = (m_1, \dots, m_n) \in \mathbb{Z}_p^n$ by choosing $\gamma \xleftarrow{R} \mathbb{Z}_p$ uniformly and computing the commitment function

$$C = g^\gamma \cdot \prod_{j=1}^n g_j^{m_j} = g^{\gamma + \Sigma_{j=1}^n m_i \cdot \alpha^j},$$

which can be seen as the evaluation (in the exponent) of a polynomial whose coefficients are $(\gamma, m_1, ..., m_n)$ for the input $\alpha \in \mathbb{Z}_p$. The commitment scheme has a second, similar, commitment function that produces a group element in the other group of the bilinear map.

To open a position $i \in [n]$ of **m** to $m_i$, the committer reveals a proof

$$\pi_i = g_{n+1-i}^\gamma \cdot \prod_{j=1, j \neq i}^n g_{n+1-i+j}^{m_j} = \left( C / g^{m_i \cdot \alpha^i} \right)^{\alpha^{n+1-i}}$$

which is verified by checking that

$$e(C, \hat{g}_{n+1-i}) = e(\pi_i, \hat{g}) \cdot e(g_1, \hat{g}_n)^{m_i}. \tag{1}$$

It can be shown mathematically that if a malicious committer can come up with a commitment $C$ and valid proofs $\pi_i$, $\pi_j$, satisfying (1) for two distinct $m_i \neq m_j$, at some position $i \in [n]$, then it can compute the missing element $g_{n+1} = g^{(\alpha^{n+1})}$ of the SRS. Accordingly, this scheme is binding under a variant of the Diffie-Hellman assumption. The common reference scheme above uses a particularly suitable set of generators, but other suitable choices may be made.

As shown in the paper by B. Libert, S. Ramanna and M. Yung, "Functional Commitment Schemes: From Polynomial Commitments to Pairing-Based Accumulators from Simple Assumptions", this vector commitment allows proving that a committed vector $\mathbf{m} \in \mathbb{Z}_p^n$ satisfies an inner product relation $\langle \mathbf{m}, \mathbf{t} \rangle = x$ for public $\mathbf{t} = (t_1, ..., t_n) \in \mathbb{Z}_p^n, x \in \mathbb{Z}_p$, by using aggregation. For example, one can raise (1) to the power $t_i \in \mathbb{Z}_p$ and take the product over all indices $i \in [n]$ to obtain

$$e(C, \prod_{i=1}^n \hat{g}_{n+1-i}^{t_i}) = e(\prod_{i=1}^n \pi_i^{t_i}, \hat{g}) \cdot e(g_1, \hat{g}_n)^{\Sigma_{i=1}^n m_i \cdot t_i}. \tag{2}$$

By assuming a random oracle $H$, proofs $\{\pi_i\}_{i \in S}$ may be aggregated for a sub-vector $S \subseteq [n]$ by deriving random aggregation coefficients $t_i = H(i, C, S, \mathbf{m}[S]) \in \mathbb{Z}_p$, where $\mathbf{m}[S]$ is the sub-vector $(m_i)_{i \in S}$, and defining the aggregated proof as the product $\pi_S = \prod_{i \in S} \pi_i^{t_i}$. Verification is achieved by checking that

$$e(C, \prod_{i \in S} \hat{g}_{n+1-i}^{t_i}) = e(\pi_S, \hat{g}) \cdot e(g_1, \hat{g}_n)^{\Sigma_{i \in S} m_i \cdot t_i}.$$

**Proving binarity of a committed vector**

In an embodiment, the vector commitment common reference string contains the description of groups $(\mathbb{G}, \widehat{\mathbb{G}}, \mathbb{G}_T)$ with a bilinear map e: $\mathbb{G} \times \widehat{\mathbb{G}} \to \mathbb{G}_T$ and generators

$$\left( g, \{g_i = g^{(\alpha^i)}\}_{i \in [2n] \setminus \{n+1\}} \right) \quad \text{and} \quad \left( \hat{g}, \{\hat{g}_i = \hat{g}^{(\alpha^i)}\}_{i=1}^n \right),$$

where $n$ is the dimension of committed vectors. The prover computes a commitment $\hat{C} = \hat{g}^\gamma \cdot \prod_{j=1}^n \hat{g}_j^{x_j}$ for a random $\gamma \in \mathbb{Z}_p$ and a vector x = $(x_1, ..., x_n) \in \{0,1\}^n$.

Using the aggregation properties of the commitment, it can be demonstrated that $x_i \in \{0,1\}$ for each $i \in [n]$ by showing that, for each $i \in [n]$, we have $x_i \cdot (x_i - 1) = 0 \bmod p$. This implies $x_i \in \{0,1\}$ since $p$ is prime. This can be shown by using a randomization vector and aggregating the individual equalities, and show that

$$\sum_{i=1}^n y_i \cdot x_i \cdot (x_i - 1) = 0 \bmod p$$

. The randomization vector $\mathbf{y} = (y_1, \dots, y_n) \in \mathbb{Z}_p^n$ is a vector of random aggregation coefficients, which may be obtained by hashing $\mathbf{y} = H(\hat{C})$, e.g., using a random oracle $H : \{0,1\}^* \to \mathbb{Z}_p^n$, which may be implemented as a hash function. Examples include a hash from the set of hash functions SHA-2, e.g., SHA-256, or from SHA-3. The vector $\mathbf{y} \in \mathbb{Z}_p^n$ is chosen uniformly after $\{x_i\}_{i=1}^n$, the probability to have

$$\sum_{i=1}^n y_i \cdot x_i \cdot (x_i - 1) = 0 \bmod p$$

is only $1/p < 2^{-\lambda}$ (where $\lambda$ is the security parameter) if there exists $i \in [n]$ such that $x_i \notin \{0,1\}$. This follows from the Schwartz-Zippel lemma.

In order to prove the statement using a constant number of group elements, first an auxiliary commitment may be generated by evaluating a commitment function:

$$C_y = g^{\gamma_y} \cdot \prod_{j=1}^n g_{n+1-j}^{y_j \cdot x_j}, \tag{3}$$

for a random $\gamma_y \xleftarrow{R} \mathbb{Z}_p$, which can be seen as a commitment to the same vector $(x_1, \dots, x_n)$ as $\hat{C}$, but in the reversed order and where the $i$-th entry is multiplied by $y_i$ for each $i \in [n]$. Then, two proofs can be generated:

An equality proof is computed that demonstrates that $C_y$ commits to a vector of the form $(y_n \cdot x_n, \dots, y_1 \cdot x_1)$, e.g., the reverse of an auxiliary vector. The commitment (3) satisfies:

$$e(C_y, \hat{g}_i) = e(g_i^{\gamma_y} \cdot \prod_{j=1, j \neq i}^n g_{n+1-j+i}^{y_j \cdot x_j}, \hat{g}) \cdot e(g_1, \hat{g}_n)^{y_i \cdot x_i} \qquad \forall i \in [n] \tag{4}$$

Here, the group element $g_i^{\gamma_y} \cdot \prod_{j=1, j \neq i}^n g_{n+1-j+i}^{y_j \cdot x_j}$ may be regarded as a proof opening the value $y_i \cdot x_i$. The initial commitment $\hat{C} = \hat{g}^\gamma \cdot \prod_{j=1}^n \hat{g}_j^{x_j}$ satisfies

$$e(g_{n+1-i}, \hat{C}) = e(\underbrace{g_{n+1-i}^\gamma \cdot \prod_{j=1, j \neq i}^n g_{n+1-i+j}^{x_j}}_{\triangleq \pi_{x,i}}, \hat{g}) \cdot e(g_1, \hat{g}_n)^{x_i} \qquad \forall i \in [n], \tag{5}$$

A randomization vector $(t_1, \dots, t_n) \xleftarrow{R} \mathbb{Z}_p^n$ may be chosen for random exponents, and used to raise (5) to the power $t_i \cdot y_i$ and (4) to the power $t_i$, respectively. If we divide them for each $i \in [n]$ and take the product of the ratios over all indices $i \in [n]$, we find that

$$\pi_{eq} = \frac{\prod_{i=1}^n (g_{n+1-i}^\gamma \cdot \prod_{j \in [n] \setminus \{i\}} g_{n+1-i+j}^{x_j})^{t_i \cdot y_i}}{\prod_{i=1}^n (g_i^{\gamma_y} \cdot \prod_{j \in [n] \setminus \{i\}} g_{n+1-j+i}^{y_j \cdot x_j})^{t_i}}.$$

satisfies

$$\frac{e(\prod_{i=1}^n g_{n+1-i}^{t_i \cdot y_i}, \hat{C})}{e(C_y, \prod_{i=1}^n \hat{g}_i^{t_i})} = e(\pi_{eq}, \hat{g}), \tag{6}$$

The reason why $\pi_{eq}$ is a convincing proof that $C_y$ is a commitment to $(y_n \cdot x_n, ..., y_1 \cdot x_1)$ is the following. Suppose that $C_y$ is a commitment $C_y = g^{\gamma_y} \cdot \prod_{j=1}^n g_{n+1-j}^{z_{n+1-j}}$ to some vector $(z_1, ..., z_n)$. Then, (4) becomes

$$e(C_y, \hat{g}_i) = e(\pi_{z,i}, \hat{g}) \cdot e(g_1, \hat{g}_n)^{z_{n+1-i}} \qquad \forall i \in [n] \ , \qquad (7)$$

where $\pi_{z,i} = \prod_{j=1, j \neq i}^n g_{n+1-j+i}^{z_{n+1-j}}$ is the proof that a prover can compute to open the (n + 1 - i)-th position of $C_y$. Now, if we raise (7) to the power $t_i$ and divide it from (5) raised to the power $t_i \cdot y_i$, we obtain

$$\frac{e(\prod_{i=1}^n g_{n+1-i}^{t_i \cdot y_i}, \hat{C})}{e(C_y, \prod_{i=1}^n \hat{g}_i^{t_i})}$$

$$= e(\prod_{i=1}^n (\pi_{x,i}^{y_i} / \pi_{z,i})^{t_i}, \hat{g}) \cdot e(g_1, \hat{g}_n)^{\sum_{i=1}^n t_i \cdot (y_i \cdot x_i - z_{n+1-i})},$$

where $\pi_{x,i} = \prod_{j=1, j \neq i}^n g_{n+1-i+j}^{x_j}$ is the computable proof that allows opening the i-th position of $\hat{C}$ in (5). If $(t_1, ..., t_n)$ is chosen uniformly after $(z_1, ..., z_n)$, $(y_1, ..., y_n)$ and $(x_1, ..., x_n)$, then the probability to have

$$\sum_{i=1}^n t_i \cdot (y_i \cdot x_i - z_{n+1-i}) = 0 \bmod p$$

is 1/p < 1/2$^\lambda$ if there exists $i \in [n]$ such that $z_{n+1-i} \neq y_i \cdot x_i$. If $\sum_{i=1}^n t_i \cdot (y_i \cdot x_i - z_{n+1-i}) \neq 0$, the prover cannot efficiently compute a valid proof $\pi_{eq}$ satisfying (6) as this would require to have $g_{n+1}^{\sum_{i=1}^n t_i \cdot (y_i \cdot x_i - z_{n+1-i})}$ and $g_{n+1} = g^{(\alpha^{n+1})}$ is not publicly available. In an embodiment, one may derive $\mathbf{t} = (t_1, ..., t_n) = H(\mathbf{y}, \hat{C}, C_y) \in \mathbb{Z}_p^n$ from a hash function, e.g., modeled as a random oracle, to make sure $(t_1, ..., t_n)$ is computed after $\mathbf{y}$, $(x_1, ..., x_n)$ and $(z_1, ..., z_n)$. The randomizing vectors $\mathbf{y}$ and $\mathbf{t}$ may be obtained in other ways if desired; For example, the hash functions may comprise further dependencies, the randomizing vectors may be obtained from other cryptographic protocols, and so on, as long as they are chosen randomly and independently of $x$ and $z$.

The proof $\pi_{eq}$ implies that the product $C_y \cdot \prod_{j=1}^n g_{n+1-j}^{-y_j}$ is a commitment to the vector $(y_n \cdot (x_n - 1), ..., y_1 \cdot (x_1 - 1))$, where $(x_1, ..., x_n)$ is the vector committed in $\hat{C}$. In an orthogonality proof, it is demonstrated that $(y_n \cdot (x_n - 1), ..., y_1 \cdot (x_1 - 1))$ is orthogonal to $(x_n, ..., x_1)$: i.e., $\sum_{i=1}^n y_i \cdot x_i \cdot (x_i - 1) = 0$. From (2), we notice that such a proof can be obtained as

$$\pi_y = C_y^\gamma \cdot \prod_{i=1}^n (g_i^{\gamma_y} \cdot \prod_{j \in [n] \setminus \{i\}} g_{n+1-j+i}^{y_j \cdot (x_j - 1)})^{x_i}$$

and satisfies

$$e(C_y \cdot \prod_{j=1}^n g_{n+1-j}^{-y_j}, \hat{C})$$

$$= e(\pi_y, \hat{g}) \cdot e(g_1, \hat{g}_n)^{\sum_{i=1}^n y_i \cdot x_i \cdot (x_i - 1)} = e(\pi_y, \hat{g}) \qquad (8)$$

In order to reduce the proof size, the linearity of verification equations (6) and (8) may be used to aggregate

$\pi_{eq}$ and $\pi_y$ into a single group element $\pi = \pi_{eq}^{\delta_{eq}} \cdot \pi_y^{\delta_y}$ using random aggregation coefficients $(\delta_{eq}, \delta_y) \in \mathbb{Z}_p^2$. The random aggregation could be obtained from a hash function, e.g., applied to the main and auxiliary commitment.

Eventually, the entire proof $\pi = (C_y, \pi) \in \mathbb{G}^2$ may comprise just the auxiliary commitment $C_y$ to $(y_n \cdot x_n, ..., x_1)$ and the aggregated proof $\pi \in \mathbb{G}$.

In the above embodiment, a first auxiliary commitment is computed as $C_y = g^{\gamma y} \cdot \prod_{j=1}^n g_{n+1-j}^{y_j \cdot x_j}$, from which a second auxiliary commitment is computed to verify the orthogonality proof, $C_y \cdot \prod_{j=1}^n g_{n+1-j}^{-y_j}$ Instead, the prover could have computed $C_y = g^{\gamma y} \cdot \prod_{j=1}^n g_{n+1-j}^{y_j \cdot x_j - y_j}$ as the first auxiliary commitment instead. In this case, the first auxiliary commitment could be used directly by the verifier. However, then the verifier would compute a second auxiliary commitment to verify the equality proof. The second auxiliary commitment would then be computed as $C_y \cdot \prod_{j=1}^n g_{n+1-j}^{+y_j}$.

As mentioned above, embodiments may use any vector commitment over groups $(\mathbb{G}, \widehat{\mathbb{G}}, \mathbb{G}_T)$ equipped with a bilinear map $e: \mathbb{G} \times \widehat{\mathbb{G}} \to \mathbb{G}_T$, where: (i) The common reference string contains generators $(g_1, ..., g_{n_1}) \in \mathbb{G}^{n_1}, (\hat{g}_1, ..., \hat{g}_{n_2}) \in \widehat{\mathbb{G}}^{n_2}$; (ii) A commitment to a vector $(x_1, ..., x_n)$ comprises group elements $(C_1, ..., C_{m_1}) \in \mathbb{G}^{m_1}, (\hat{C}_1, ..., \hat{C}_{m_2}) \in \widehat{\mathbb{G}}^{m_2}$; (iii) A partial opening at position $i \in [n]$ comprises group elements $(\pi_1, ..., \pi_{\ell_1}) \in \mathbb{G}^{\ell_1}$ and $(\hat{\pi}_1, ..., \hat{\pi}_{\ell_2}) \in \widehat{\mathbb{G}}^{\ell_2}$ and satisfies a verification of the form $\prod_{\tau=1}^{m_1} e(C_\tau, \hat{g}_{\mu_\tau(i)}) \cdot \prod_{\tau=1}^{m_2} e(g_{v_\tau(i)}, \hat{C}_\tau) \cdot \prod_{\tau=1}^{\ell_1} e(\pi_\tau, \hat{g}_{j_\tau}) \cdot \prod_{\tau=1}^{\ell_2} e(g_{k_\tau}, \hat{\pi}_\tau) \cdot g_T^{x_i} = 1_{\mathbb{G}_T}$, where $g_T \in \mathbb{G}_T$ is publicly computable from the common reference string; $v_1(i), ..., v_{m_2}(i) \in [n_1]$ and $\mu_1(i), ..., \mu_{m_1}(i) \in [n_2]$ are functions of the opened index $i \in [n]$; and $j_1, ...j_{\ell_1} \in [n_2], k_1, ..., k_{\ell_2} \in [n_1]$ are fixed.

The above embodiments is a special case of the above equation, where $m_1 = 1$, $m_2 = 0$, $\ell_1 = 1$, $\ell_2 = 0$ and $g_T = e(g_1, \hat{g}_n)$.

## Example 1, detailed embodiment

On input of a security parameter $\lambda$ and the maximal dimension $n \in \text{poly}(\lambda)$ of committed vectors, do the following:

- Choose asymmetric bilinear groups $(\mathbb{G}, \widehat{\mathbb{G}}, \mathbb{G}_T)$ of prime order p > $2^{l(\lambda)}$, for some function $l: \mathbb{N} \to \mathbb{N}$, and $g \xleftarrow{R} \mathbb{G}, \hat{g} \xleftarrow{R} \widehat{\mathbb{G}}$.

- Pick a random $\alpha \xleftarrow{R} \mathbb{Z}_p$. Compute $g_1, ..., g_n, g_{n+2}, ..., g_{2n} \in \mathbb{G}$ and $\hat{g}_1, ..., \hat{g}_n \in \widehat{\mathbb{G}}$, where $g_i = g^{(\alpha^i)}$ for each $i \in [2n]\setminus\{n + 1\}$ and $\hat{g}_i = g^{(\alpha^i)}$ for each $i \in [n]$.

- Choose hash functions $H, H_t: \{0,1\}^* \to \mathbb{Z}_p^n$ and $H_{agg}: \{0,1\}^* \to \mathbb{Z}_p^2$.

The public parameters are defined to be

$$pp = ((\mathbb{G}, \widehat{\mathbb{G}}, \mathbb{G}_T), g, \hat{g}, \{g_i\}_{i \in [2n]\setminus\{n+1\}}, \{\hat{g}_i\}_{i \in [n]}, H)$$

where **H** = {$H, H_t, H_{agg}$} are hash functions. The public parameters are made available to the verifier. Typically, sharing public parameters need not be done for each demonstration, and may be assumed to have been done at a previous iteration.

To commit to a main vector $\mathbf{x} = (x_1, \dots, x_n) \in \mathbb{Z}_p^n$, choose a random $\gamma \xleftarrow{R} \mathbb{Z}_p$ and compute the main commitment by evaluating the following first commitment function,

$$\hat{C} = \hat{g}^{\gamma} \cdot \prod_{j=1}^n \hat{g}_j^{x_j}$$

Return the main commitment $\hat{C} \in \widehat{\mathbb{G}}$ and the opening information $\text{aux} = \gamma \in \mathbb{Z}_p$ to the prover.

Given a commitment $\hat{C}$ and witnesses (**x**; aux) comprising a vector $\mathbf{x} = (x_1, \dots, x_n) \in \mathbb{Z}_p^n$ and randomness $\text{aux} = \gamma \in \mathbb{Z}_p$ return $\perp$ if $(x_1, \dots, x_n) \notin \{0,1\}^n$. Otherwise, do the following:

- Compute the randomizing vector $\mathbf{y} = (y_1, \dots, y_n) = H(\hat{C}) \in \mathbb{Z}_p^n$. Next, choose $\gamma_y \xleftarrow{R} \mathbb{Z}_p$ and compute the auxiliary commitment by computing a second commitment function

$$C_y = g^{\gamma_y} \cdot \prod_{j=1}^n g_{n+1-j}^{y_j \cdot x_j}$$

Then, compute randomizing vector $\mathbf{t} = (t_1, \dots, t_n) = H_t(\mathbf{y}, \hat{C}, C_y) \in \mathbb{Z}_p^n$.

- Generate an equality proof

$$\pi_{eq} = \frac{\prod_{i=1}^n (g_{n+1-i}^{\gamma} \cdot \prod_{j \in [n] \setminus \{i\}} g_{n+1-i+j}^{x_j})^{t_i \cdot y_i}}{\prod_{i=1}^n (g_i^{\gamma_y} \cdot \prod_{j \in [n] \setminus \{i\}} g_{n+1-j+i}^{y_j \cdot x_j})^{t_i}}$$

which satisfies

$$\frac{e(\prod_{i=1}^n g_{n+1-i}^{t_i \cdot y_i}, \hat{C})}{e(C_y, \prod_{i=1}^n \hat{g}_i^{t_i})} = e(\pi_{eq}, \hat{g}) , \qquad (9)$$

and shows that $C_y$ hides the same vector $(x_1, \dots, x_n) \in \mathbb{Z}_p^n$ as $\hat{C}$ but in reversed order.

- Compute an orthogonality proof $\pi_y \in \mathbb{G}$ that $\sum_{i=1}^n y_i \cdot x_i \cdot (x_i - 1) = 0$. This proof $\pi_y$ is computed as

$$\pi_y = C_y^{\gamma} \cdot \prod_{i=1}^n (g_i^{\gamma_y} \cdot \prod_{j \in [n] \setminus \{i\}} g_{n+1-j+i}^{y_j \cdot (x_j - 1)})^{x_i}$$

and satisfies

$$e(C_y \cdot \prod_{j=1}^n g_{n+1-j}^{-y_j}, \hat{C}) = e(\pi_y, \hat{g}) \qquad (10)$$

The element $C_y \cdot \prod_{j=1}^n g_{n+1-j}^{-y_j}$ can be regarded as a second auxiliary commitment, in the sense that it commits to a vector, although the second auxiliary commitment is typically computed by a verifier.

- Compute $(\delta_{eq}, \delta_y) = H_{agg}(\hat{C}, C_y) \in \mathbb{Z}_p^2$ and compute an aggregated proof

$$\pi = \pi_{eq}^{\delta_{eq}} \cdot \pi_y^{\delta_y}.$$

Output the final proof

$$\pi := (C_y, \pi) \in \mathbb{G}^2. \tag{11}$$

The public parameters, final proof, main commitment may be shared with a verifier.

A verifier may proceed as follows. Given a commitment $\hat{C} \in \widehat{\mathbb{G}}$ and a purported proof $\pi$, parse the latter as in (11).

- Compute $\mathbf{y} = H(\hat{C}) \in \mathbb{Z}_p^n$, $(\delta_{eq}, \delta_y) = H_{agg}(\hat{C}, C_y) \in \mathbb{Z}_p^2$ and $\mathbf{t} = H_t(\mathbf{y}, \hat{C}, C_y) \in \mathbb{Z}_p^n$.
- Return 1 if

$$\frac{e(C_y^{\delta_y} \cdot \prod_{i=1}^n g_{n+1-i}^{(\delta_{eq} \cdot t_i - \delta_y) \cdot y_i}, \hat{C})}{e(C_y, \prod_{i=1}^n \hat{g}_i^{\delta_{eq} \cdot t_i})} = e(\pi, \hat{g}). \tag{12}$$

and 0 otherwise.

In terms of proof length, $\pi$ requires just 2 element of $\mathbb{G}$ , which is even shorter than size-optimal SNARKs for general NP languages. Using the KSS18 family of pairing-friendly curves suggested by Kachisa *et al.* , each element of $\mathbb{G}$ (resp. $\widehat{\mathbb{G}}$ ) can have a 348-bit (resp. 1044-bit) representation at the 128-bit security level. The overall proof length does not exceed 696 bits. Remarkably, the overall proof length does not depend on the dimension of the main vector. The computational cost of the prover is dominated by 3n exponentiations in $\mathbb{G}$ . The verifier's workload amounts to $n$ exponentiations in $\mathbb{G}$ , $n$ exponentiations in $\widehat{\mathbb{G}}$ and 3 pairings.

It is possible to modify the scheme in such a way that the commitment $\hat{C}$ lives in $\mathbb{G}$ and $C_y$ lives in $\widehat{\mathbb{G}}$ , rather than the opposite. However, the proof is shorter when $C_y$ lives in $\mathbb{G}$ since elements of $\mathbb{G}$ usually have a shorter representation. A second example embodiment where $C_y$ is in $\widehat{\mathbb{G}}$ is provided below.

Interestingly, one can prove mathematically that the construction is perfectly zero-knowledge against algebraic adversaries. Furthermore, one can prove knowledge-soundness in the algebraic group model, e.g., as formalized in the paper by G. Fuchsbauer, E. Kiltz, and J. Loss, "The Algebraic Group Model and its Applications", and in the random oracle model. This means that, from any algebraic adversary that comes up with a valid proof, we can either extract a witness or break the (2*n*, *n*)-DLOG assumption. Under the (2*n*, *n*)-DLOG assumption, the scheme provides knowledge-soundness in the algebraic group model and in the random oracle model.

**Example 2, detailed embodiment**

In the second example embodiment the vector commitment now lives in $\mathbb{G}$ and the proof computes an auxiliary commitment in $\widehat{\mathbb{G}}$ . The final proof $\pi$ thus comprises two elements in different groups.

On input of a security parameter $\lambda$ and the maximal dimension $n \in \text{poly}(\lambda)$ of committed vectors, do the following:

- Choose asymmetric bilinear groups $(\mathbb{G}, \widehat{\mathbb{G}}, \mathbb{G}_T)$ of prime order $p > 2^{l(\lambda)}$, for some function $l: \mathbb{N} \to \mathbb{N}$ , and $g \xleftarrow{R} \mathbb{G}, \hat{g} \xleftarrow{R} \widehat{\mathbb{G}}$ .

- Pick a random $\alpha \xleftarrow{R} \mathbb{Z}_p$ . Compute $g_1, \dots, g_n, g_{n+2}, \dots, g_{2n} \in \mathbb{G}$ and $\hat{g}_1, \dots, \hat{g}_n \in \widehat{\mathbb{G}}$ , where $g_i = g^{(\alpha^i)}$ for each $i \in [2n]\backslash\{n + 1\}$ and $\hat{g}_i = \hat{g}^{(\alpha^i)}$ for each $i \in [n]$.

- Choose hash functions $H, H_t: \{0,1\}^* \to \mathbb{Z}_p^n$ and $H_{\text{agg}}: \{0,1\}^* \to \mathbb{Z}_p^2$.

The public parameters are

$$pp = \left( (\mathbb{G}, \widehat{\mathbb{G}}, \mathbb{G}_T), g, \hat{g}, \{g_i\}_{i \in [2n] \setminus \{n+1\}}, \{\hat{g}_i\}_{i \in [n]}, \mathbf{H} \right)$$

where $\mathbf{H} = \{H, H_t, H_{\text{agg}}\}$ are hash functions.

To commit to a main vector $\mathbf{x} = (x_1, \ldots, x_n) \in \mathbb{Z}_p^n$, choose a random $\gamma \xleftarrow{R} \mathbb{Z}_p$ and compute the main commitment

$$C = g^\gamma \cdot \prod_{j=1}^n g_j^{x_j}$$

Return $C \in \mathbb{G}$ and the opening information $\text{aux} = \gamma \in \mathbb{Z}_p$.

Given the main commitment C and witnesses (x; aux) comprising the main vector x = $(x_1, \ldots, x_n) \in \mathbb{Z}_p^n$ and randomness $\text{aux} = \gamma \in \mathbb{Z}_p$, return $\perp$ if $(x_1, \ldots, x_n) \notin \{0,1\}^n$. Otherwise, do the following:

- Compute a randomizing vector $\mathbf{y} = (y_1, \ldots, y_n) = H(C) \in \mathbb{Z}_p^n$ Next, choose $\gamma_y \xleftarrow{R} \mathbb{Z}_p$ and compute an auxiliary commitment

$$\hat{C}_y = \hat{g}^{\gamma_y} \cdot \prod_{j=1}^n \hat{g}_{n+1-j}^{y_j \cdot x_j}$$

Then, compute a randomizing vector $\mathbf{t} = (t_1, \ldots, t_n) = H_t(\mathbf{y}, C, \hat{C}_y) \in \mathbb{Z}_p^n$.

- Generate an equality proof

$$\pi_{eq} = \frac{\prod_{i=1}^n (g_{n+1-i}^\gamma \cdot \prod_{j \in [n] \setminus \{i\}} g_{n+1-i+j}^{x_j})^{t_i \cdot y_i}}{\prod_{i=1}^n (g_i^{\gamma_y} \cdot \prod_{j \in [n] \setminus \{i\}} g_{n+1-j+i}^{y_j \cdot x_j})^{t_i}}$$

which satisfies

$$\frac{e(C, \prod_{i=1}^n \hat{g}_{n+1-i}^{t_i \cdot y_i})}{e(\prod_{i=1}^n g_i^{t_i}, \hat{C}_y)} = e(\pi_{eq}, \hat{g})$$

- Compute an orthogonality proof $\pi_y \in \mathbb{G}$ that $\sum_{i=1}^n y_i \cdot x_i \cdot (x_i - 1) = 0$. This proof $\pi_y$ is computed as

$$\pi_y = (g^{\gamma_y} \cdot \prod_{j=1}^n g_{n+1-j}^{y_j \cdot x_j})^\gamma \cdot \prod_{i=1}^n (g_i^{\gamma_y} \cdot \prod_{j \in [n] \setminus \{i\}} g_{n+1-j+i}^{y_j \cdot (x_j-1)})^{x_i}$$

and satisfies

$$e(C, \hat{C}_y \cdot \prod_{j=1}^n \hat{g}_{n+1-j}^{-y_j}) = e(\pi_y, \hat{g})$$

The element $\hat{C}_y \cdot \prod_{j=1}^{n} \hat{g}_{n+1-j}^{-y_j}$ can be regarded as a second auxiliary commitment, in the sense that it commits to a vector, although the second auxiliary commitment is typically computed by a verifier.

- Compute $(\delta_{eq}, \delta_y) = H_{agg}(C, \hat{C}_y) \in \mathbb{Z}_p^2$ and compute an aggregated proof

$$\pi = \pi_{eq}^{\delta_{eq}} \cdot \pi_y^{\delta_y}.$$

Output the final proof

$$\boldsymbol{\pi} := (\hat{C}_y, \pi) \in \widehat{\mathbb{G}} \times \mathbb{G}. \tag{13}$$

Given a commitment $C \in \mathbb{G}$ and a purported proof $\pi$, parse it as in (13).

- Compute $\mathbf{y} = H(C) \in \mathbb{Z}_p^n$, $(\delta_{eq}, \delta_y) = H_{agg}(C, \hat{C}_y) \in \mathbb{Z}_p^2$ and $\mathbf{t} = H_t(\mathbf{y}, C, \hat{C}_y) \in \mathbb{Z}_p^n$.
- Return 1 if

$$\frac{e(C, \hat{C}_y^{\delta_y} \cdot \prod_{i=1}^{n} \hat{g}_{n+1-i}^{(\delta_{eq} \cdot t_i - \delta_y) \cdot y_i})}{e(\prod_{i=1}^{n} g_i^{\delta_{eq} \cdot t_i}, \hat{C}_y)} = e(\pi, \hat{g}).$$

and 0 otherwise

In both the first and second example embodiments, the second auxiliary commitment is computed for the verification of the orthogonality proof, while the equality proof uses the first auxiliary commitment directly. This could be changed around though for either embodiment.

**Example applications**

The preferred embodiment can be used in many applications. Exemplifying applications are .discussed below.

**Short proofs that committed vectors are short.**

The first application is to construct proofs that a committed scalar belongs to an interval, which can be useful, e.g., in blockchain transactions. The need for such proofs is explained, e.g., in the paper by Benedikt Bünz, et al., "Bulletproofs: Short Proofs for Confidential Transactions and More", see, e.g., section 1.2.1, explaining Confidential Transactions. We briefly explain the idea for committed scalars, e.g., vectors of dimension $n$ = 1. To prove that $\hat{V} = \hat{g}^r \cdot \hat{g}_1^x$ is a commitment to a small $x \in [0, 2^\ell - 1]$, we may use a commitment scheme that is also an inner product functional commitment. A description of this property and an example of such a commitment scheme is given in the paper by B. Libert and M. Yung, "Concise mercurial vector commitments and independent zero-knowledge sets with short proofs."

The prover has a Pedersen commitment $\hat{V} = \hat{g}^r \cdot \hat{g}_1^x$ in the second source group $\widehat{\mathbb{G}}$ of the bilinear map. In order to prove $x \in [0, 2^\ell - 1]$, the prover considers the bit representation $(x_1, \ldots, x_\ell) \in \{0,1\}^\ell$ of $x$ and computes a commitment $\hat{C} = \hat{g}^\gamma \cdot \prod_{j=1}^{n} g_j^{x_j}$ for a random $\gamma \in \mathbb{Z}_p$.

Using the aggregation properties of the commitment, it can be demonstrated that the committed vector $(x_1, \ldots, x_n) \in \mathbb{Z}_p^n$ satisfies: (i) $\sum_{i=1}^{\ell} x_i \cdot 2^{i-1} = x$; (ii) $x_i \in \{0,1\}$ for each $i \in [\ell]$. In order to prove (i), the prover can adapt (2) so as to generate a short proof $\prod_{i=1}^{\ell} \pi_i^{2^{i-1}} \in \mathbb{G}$ such that

$$e(\prod_{i=1}^{\ell} g_{n+1-i}^{2^{i-1}}, \hat{C}) = e(\prod_{i=1}^{\ell} \pi_i^{2^{i-1}}, \hat{g}) \cdot e(g_1, \hat{g}_n)^{\sum_{i=1}^{\ell} x_i \cdot 2^{i-1}} \qquad (14)$$

and show that the exponent above $e(g_1, \hat{g}_n)$ in (14) is equal to the committed $x$ in $\hat{V} = \hat{g}^r \cdot \hat{g}_1^x$. Since $\hat{V}$ satisfies

$$e(g_n, \hat{V}) = e(g_1, \hat{g}_n)^x \cdot e(g_n^r, \hat{g}),$$

the prover can actually compute $\pi_x = \prod_{i=1}^{\ell} \pi_i^{2^{i-1}} / g_n^r$ such that

$$\frac{e(\prod_{i=1}^{\ell} g_{n+1-i}^{2^{i-1}}, \hat{C})}{e(g_n, \hat{V})} = e(\pi_x, \hat{g}). \qquad (15)$$

Proving (ii) can be addressed using an embodiment. The entire statement can be proven using just 3 group elements (namely, one element of $\widehat{\mathbb{G}}$ and two elements of $\mathbb{G}$ ). This construction yields the a range proof shorter than any known in the art, e.g., only 3 group elements which is as short as size-optimal SNARKs.

The construction outlined above easily extends to prove that a vector commitment $\hat{V} = \hat{g}^r \cdot \prod_{j=1}^{n} \hat{g}_j^{x_j}$ is a commitment to a vector x = ($x_1$, ... , $x_n$) with small entries, e.g., having entries in a range, e.g., above and/or below a threshold. We can prove that all entries belong to possibly distinct ranges using just 3 group elements.

We can also handle ranges [0, B] where $B$ + 1 is not a power of 2. The standard approach to this problem is to consider the integer $\ell \in \mathbb{N}$ such that $2^{\ell-1} \le B < 2^\ell$ and generate two range proofs showing that $x \in [0, 2^\ell$ - 1] and $x$ + ($2^\ell$ - 1 - $B$) $\in [0, 2^\ell$ - 1], where the second part is proven using the additive homomorphic property of the commitment. Instead of generating two independent range proofs, we can instead double the size of the CRS (by setting $n = 2\bar{\ell}$, where $\bar{\ell} \ge \ell$ is the maximal bitlength of the range) and avoid increasing the proof size.

**Short proofs for ring LWE ciphertexts.**

As a second application, it can be used to prove the validity of ring LWE ciphertexts using just 3 group elements. This uses embodiments of the short proofs that a committed vector is binary. This example also exploits the fact that the underlying vector commitment allows proving inner-product relations.

Let the polynomial rings $R = \mathbb{Z}[X]/(\Phi)$ , for some cyclotomic polynomial of degree $d$, and $R_q = R/(qR)$. We aim at proving the existence of a witness s = ($s_1$, ... , $s_M$) $\in R^M$ comprised of small-norm ring elements such that

$$\sum_{i=1}^{M} \mathbf{a}_i \cdot s_i = \mathbf{t} \bmod (q, \Phi) \qquad (16)$$

for public $\mathbf{t} \in R_q^N$ and $\mathbf{a}_1, ..., \mathbf{a}_M \in R_q^N$ . To this end, we re-write (16) as the following equality over $\mathbb{Z}[X]/(\Phi)$

$$\sum_{i=1}^{M} \mathbf{a}_i \cdot s_i = \mathbf{t} + \mathbf{r} \cdot q \bmod (\Phi), \qquad (17)$$

where $\mathbf{r} \in R^N$ is a vector of polynomials of degree $\le d$ - 1 and the components of $\{\mathbf{a}_i\}_{i=1}^{M}$ and t are interpreted as polynomials with coefficients in $\{-\lfloor q/2 \rfloor, ..., \lfloor q/2 \rfloor\}$ . If $\|s_i\|_\infty \le B_i$ for each $i \in$ [M], r contains polynomials with coefficients of magnitude smaller than $\|\mathbf{r}\|_\infty \le dM \cdot \max_{i \in [M]}(B_i)/2$.

Let us parse $\mathbf{a}_i = (a_{i,1}, ..., a_{i,N})^\mathsf{T} \in R_q^N$ . Let the coefficient embedding $\phi : R \to \mathbb{Z}^d$ that maps

$s_i = \sum_{j=1}^{d} s_{i,j} \cdot X^{j-1}$ to its coefficient vector $\phi(s_i) = (s_{i,1}, \ldots, s_{i,d}) \in \mathbb{Z}^d$. Let $rot(a_{i,j}) \in \mathbb{Z}^{d \times d}$ the structured matrix such that $\phi(a_{i,j} \cdot s_i \bmod(\Phi)) = rot(a_{i,j}) \cdot \phi(s_i) \in \mathbb{Z}^d$. If we re-write (17) as a matrix-vector product over $\mathbb{Z}$, we obtain the relation

$$[\mathbf{A}_1 | \ldots | \mathbf{A}_M] \cdot \begin{bmatrix} \phi(s_1) \\ \vdots \\ \phi(s_M) \end{bmatrix} = \sum_{i=1}^{M} \mathbf{A}_i \cdot \phi(s_i) = \phi(\mathbf{t}) + \phi(\mathbf{r}) \cdot q \qquad (18)$$

where $\mathbf{A}_i = [rot(a_{i,1})^\top | \ldots | rot(a_{i,N})^\top]^\top \in \mathbb{Z}_q^{Nd \times d}$ for each $i \in [M]$. Equivalently, (18) can be written

$$[\mathbf{A}_1 | \ldots | \mathbf{A}_M | - q \cdot \mathbf{I}_{Nd}] \cdot \begin{bmatrix} \phi(s_1) \\ \vdots \\ \phi(s_M) \\ \phi(\mathbf{r}) \end{bmatrix} = \phi(\mathbf{t}) \qquad (19)$$

In order to prove (19), the prover will commit to the vector $\mathbf{X} \in \mathbb{Z}^{Md+Nd}$ using a Pedersen commitment. Then, it will generate short range proof that $\| \phi(s_i) \|_\infty \leq B_i$ for each $i \in [M]$ and $\| \phi(\mathbf{r}) \|_\infty \leq dM \cdot \max_{i \in [M]}(B_i)/2$. Finally, it will prove that (19) holds over $\mathbb{Z}_p$, where $p$ is the order of $\widehat{\mathbb{G}}$. If $p > 2Mqdmax_i(B_i)$, this ensures that (19) also holds over the integers. Here, $x \bmod p$ is defined as the value $y \in (-p/2, p/2)$ such that $y = x(\bmod p)$.

In particular, this approach allows proving that a committed vector is a solution to an instance of the subset sum problem, which is useful in many applications.

Although this example proves the validity of a ring LWE ciphertext, using statement (16) the argument system easily extends to handle more general statements of the form (16).

Let a statement comprise a public key $(a, b) \in R_q^2$ and an LPR ciphertext $(t_1, t_2) = (a \cdot r + e_1, b \cdot r + e_2 + \Delta \cdot m) \in R_q^2$, where $\Delta = \lfloor q/2 \rfloor$ and $m \in R/(2R)$ is the plaintext. More information on LPR can be found, e.g., in the paper by Vadim Lyubashevsky, et al. ,"On Ideal Lattices and Learning with Errors Over Rings".

We consider a prover willing to convince a verifier that there exists a message $m \in R/(2R)$, a secret $r \in R/(2R)$, and noise terms $e_1, e_2 \in R$ of norm $\| e_1 \|_\infty, \| e_2 \|_\infty \leq B$ such that

$$\begin{bmatrix} a & & 1 & \\ b & \Delta & & 1 \end{bmatrix} \cdot \begin{bmatrix} r \\ m \\ e_1 \\ e_2 \end{bmatrix} = \begin{bmatrix} t_1 \\ t_2 \end{bmatrix} \bmod q \qquad (20)$$

We will prove the above statement by showing the existence of small polynomials $r, m \in R/(2R)$, $e_1, e_2 \in R$, and $r_1, r_2 \in R$ such that

$$\begin{bmatrix} a(X) & & 1 & & -q & \\ b(X) & \Delta & & 1 & & -q \end{bmatrix} \cdot \begin{bmatrix} r(X) \\ m(X) \\ e_1(X) \\ e_2(X) \\ r_1(X) \\ r_2(X) \end{bmatrix} = \begin{bmatrix} t_1(X) \\ t_2(X) \end{bmatrix} \bmod(\Phi)$$

with $\| e_1 \|_\infty, \| e_2 \|_\infty \leq B$, and $\| r_1 \|_\infty, \| r_2 \|_\infty \leq (d + 1)/2$. Over $\mathbb{Z}$, this can be written

$$\underbrace{\begin{bmatrix} rot(a) & & \mathbf{I}_d & & -q \cdot \mathbf{I}_d & \\ rot(b) & \Delta \cdot \mathbf{I}_d & & \mathbf{I}_d & & -q \cdot \mathbf{I}_d \end{bmatrix}}_{\triangleq \overline{\mathbf{A}}} \cdot$$

$$\underbrace{\begin{bmatrix} \phi(r) \\ \phi(m) \\ \phi(e_1) \\ \phi(e_2) \\ \phi(r_1) \\ \phi(r_2) \end{bmatrix}}_{\triangleq \mathbf{w}} = \underbrace{\begin{bmatrix} \phi(t_1) \\ \phi(t_2) \end{bmatrix}}_{\triangleq \phi(\mathbf{t})} \tag{21}$$

where $\overline{\mathbf{A}}$ is interpreted as a 2d × 6d matrix with coefficients in $\{-\lfloor q/2 \rfloor, \dots, \lfloor q/2 \rfloor\}$.

To make the proof shorter, we can directly commit to the bits of w.

For any integer $z \in \mathbb{Z}$, let $\mathbf{g}_z = (1,2,4,\dots,2^{z-2},-2^{z-1})^\top \in \mathbb{Z}^{1 \times z}$ and $\mathbf{G}_z = \mathbf{I}_d \otimes \mathbf{g}_z^\top \in \mathbb{Z}^{d \times dz}$. We also define $\mathbf{G}_z^{-1}(\mathbf{v})$ as the decomposition function that inputs an integer vector $\mathbf{v} \in [-2^{z-1}, 2^{z-1} - 1]^d$ and outputs a binary decomposition $\mathbf{G}_z^{-1}(\mathbf{v}) \in \{0,1\}^{d \cdot z}$ such that $\mathbf{G}_z \cdot \mathbf{G}_z^{-1}(\mathbf{v}) = \mathbf{v}$. Then, we can prove that

$$\underbrace{\begin{bmatrix} rot(a) & & \mathbf{G}_{1+\log B} & & -q \cdot \mathbf{G}_{\log d} & \\ rot(b) & \Delta \cdot \mathbf{I}_d & & \mathbf{G}_{1+\log B} & & -q \cdot \mathbf{G}_{\log d} \end{bmatrix}}_{\triangleq \widetilde{\mathbf{A}}} \cdot$$

$$\underbrace{\begin{bmatrix} \phi(r) \\ \phi(m) \\ \mathbf{e}_1 \\ \mathbf{e}_2 \\ \mathbf{r}_1 \\ \mathbf{r}_2 \end{bmatrix}}_{\triangleq \mathbf{w}} = \underbrace{\begin{bmatrix} \phi(t_1) \\ \phi(t_2) \end{bmatrix}}_{\triangleq \phi(\mathbf{t})} \tag{22}$$

where $\mathbf{e}_1 = \mathbf{G}_{1+\log B}^{-1}(\phi(e_1))$, $\mathbf{e}_2 = \mathbf{G}_{1+\log B}^{-1}(\phi(e_2))$, $\mathbf{r}_1 = \mathbf{G}_{\log d}^{-1}(\phi(r_1))$ and $\mathbf{r}_2 = \mathbf{G}_{\log d}^{-1}(\phi(r_2))$.

The prover can thus commit to the decomposition of the witness $\mathbf{w} \in \{0,1\}^D$, where $D = 2d(2 + \log B + \log d)$. In order to prove that relation (22) holds modulo $p$ (and thus also over $\mathbb{Z}$ since both members have infinity norm smaller than $p/2$), the prover can use a random vector $\theta \in \mathbb{Z}_p^{2d}$ (derived from a hash function with random-looking outputs) and prove that the committed $\mathbf{w} \in \{0,1\}^D$ satisfies $\theta^\top \cdot \widetilde{\mathbf{A}} \cdot \mathbf{w} = \theta^\top \cdot \phi(\mathbf{t})$ over $\mathbb{Z}_p$. By a standard argument, if $\widetilde{\mathbf{A}} \cdot \mathbf{w} \neq \phi(\mathbf{t})$ mod $p$, we have $\theta^\top \cdot (\widetilde{\mathbf{A}} \cdot \mathbf{w} - \phi(\mathbf{t})) = 0$ mod $p$ with probability $1/p$. Proving that $\theta^\top \cdot \widetilde{\mathbf{A}} \cdot \mathbf{w} = \theta^\top \cdot \phi(\mathbf{t})$ mod $p$ amounts to proving that a committed w satisfies an inner product relation, which can be done using one element of $\mathbb{G}$ as explained herein

By applying the above ideas, we can prove the validity of a ring LWE ciphertext using just 3 group elements (namely, one element of $\widehat{\mathbb{G}}$ and two elements of $\mathbb{G}$), which is very short. Under the (2n,n)-DLOG assumption, the scheme can be proven to satisfy the notion of simulation-extractability in the combined algebraic group model and random oracle model. The resulting construction thus provides simulation-extractability in the algebraic group model combined with the random oracle model using only 3 group elements per proof while the most computationally efficient simulation-extractable proofs known in the art requires 4 group elements per proof: 2 elements in $\mathbb{G}$ and 2 elements in $\widehat{\mathbb{G}}$. Simulation-extractable guarantees knowledge-soundness even if the adversary observes proofs generated by honest provers.

In addition, we obtain a shorter structured random string, by a factor 2, than if one were to use a generic SNARK for arithmetic circuits. In a SNARK-based approach it is estimated that the number of multiplication gates in the arithmetic circuit would be roughly 142000, so that the prover would have to compute more than $10^6$ exponentiations in $\mathbb{G}$ or their equivalent. In our setting, we need to commit to vectors of dimension $n \approx 112000$ and the prover has to compute less than 340000 exponentiations in $\mathbb{G}$. These estimations assume an instantiation of the LPR cryptosystem for $\lambda = 128$, where a common choice of parameters is $d = 1024$, $q \approx 2^{64}$, with binary uniform $r \in R/(2R)$ while $e_1, e_2$ are sampled from a discrete Gaussian distribution with standard deviation $\alpha q \approx 2^{39}$. In this case, a Gaussian vector $e_i \sim D_{\mathbb{Z}^d, \alpha q}$ has infinity norm $\|e_i\|_\infty \leq B = \alpha q \sqrt{\lambda} < 2^{43}$ with overwhelming probability. The formula $e_i \sim D_{\mathbb{Z}^d, \alpha q}$ denotes the discrete Gaussian over $\mathbb{Z}^d$ with standard deviation $\alpha q$ and center 0.

**Proving that a committed vector is ternary.**

Using the preferred embodiment, we can also prove that a commitment $\hat{C} = \hat{g}^\gamma \cdot \prod_{j=1}^{\ell} \hat{g}_j^{x_j}$ commits to a ternary vector $\mathbf{x} = (x_1, \dots, x_\ell) \in \{-1, 0, 1\}^\ell$. This is useful, e.g., when we want to prove the validity or a ring LWE public key for which the underlying secret key is a polynomial with coefficients in $\{-1, 0, 1\}$.

An approach is to write $\mathbf{x}$ as the difference $\mathbf{x} = \mathbf{x}_0 - \mathbf{x}_1$ between two binary vectors $\mathbf{x}_0, \mathbf{x}_1 \in \{0, 1\}^\ell$. The prover can generate two vector commitments $\hat{C}_0$, $\hat{C}_1$ to $\mathbf{x}_0$ and $\mathbf{x}_1$, respectively, before proving that: (i) $\hat{C}_0, \hat{C}_1$ are both commitments to bitstrings; (ii) $\hat{C}_0 \cdot \hat{C}_1^{-1}$ and $\hat{C}$ commit to the same vector. Even if we aggregate proofs, each proof $\pi$ still requires 2 elements of $\widehat{\mathbb{G}}$ and 3 elements of $\mathbb{G}$ since $\hat{C}_0$ and $\hat{C}_1$ both require an auxiliary commitment in $\mathbb{G}$.

At the expense of doubling the CRS size, we can reduce the size of proofs to one element of $\widehat{\mathbb{G}}$ and 2 elements of $\mathbb{G}$. To do this, we can generate a commitment to a binary vector $\mathbf{x} = (\mathbf{x}_0 | \mathbf{x}_x) \in \{0, 1\}^n$, where $n = 2\ell$. We can then prove that: (i) $\mathbf{x} = (\bar{x}_1, \dots, \bar{x}_n)$ is binary; (ii) For each $i \in [\ell]$, $\bar{x}_i - x_{i+\ell} = x_i$. In order to ensure knowledge-soundness in the security analysis, we also need a proof component $\pi_0$ showing that $\hat{C}$ commits to a vector containing zeroes in its last $\ell$ positions. For example, for the latter the proof from Sergey Gorbunov et al., "Pointproofs: Aggregating Proofs for Multiple Vector Commitments", may be used.

We can prove (i) as in previous constructions. As for (ii), we can use the properties of the underlying commitment. Namely, if $\hat{C}_x = \hat{g}^{\gamma x} \cdot \prod_{j=1}^n \hat{g}_j^{\bar{x}_j}$ is a commitment to $\mathbf{x} = (\mathbf{x}_1 | \mathbf{x}_2)$, the prover can compute $\bar{\pi}_{\theta, i, 0}, \bar{\pi}_{\theta, i, 1} \in \mathbb{G}$ such that

$$e(g_{n+1-i}, \hat{C}_x) = e(g_1, \hat{g}_n)^{\bar{x}_i} \cdot e(\bar{\pi}_{\theta, i, 0}, \hat{g}) \qquad (23)$$

and

$$e(g_{n+1-i-\ell}, \hat{C}_x) = e(g_1, \hat{g}_n)^{\bar{x}_{i+\ell}} \cdot e(\bar{\pi}_{\theta, i, 1}, \hat{g}) \qquad (24)$$

for each $i \in [\ell]$. In the initial commitment $\hat{C} = \hat{g}^\gamma \cdot \prod_{j=1}^{\ell} \hat{g}_j^{x_j}$ to the ternary $\mathbf{x} = (x_1, \dots, x_\ell)$, we also have

$$e(g_{n+1-i}, \hat{C}) = e(g_1, \hat{g}_n)^{x_i} \cdot e(\tilde{\pi}_{\theta, i}, \hat{g}) \qquad \forall i \in [\ell] \qquad (25)$$

for some $\tilde{\pi}_{\theta, i} \in \mathbb{G}$ computable by the prover. By combining (23)-(25), we have

$$\frac{e(g_{n+1-i} \cdot g_{n+1-i-\ell}^{-1}, \hat{C}_x)}{e(g_{n+1-i}, \hat{C})} = e(\underbrace{\bar{\pi}_{\theta,i,0}/(\bar{\pi}_{\theta,i,1} \cdot \tilde{\pi}_{\theta,i})}_{\triangleq \pi_{\theta,i}}, \hat{g}), \qquad (26)$$

where $\pi_{\theta,i}$ is computable by the prover and argues that $x_i = \bar{x}_i - \bar{x}_{i+\ell}$. We can then aggregate proofs for all positions $i \in [\ell]$ at once by raising (26) to a random power $\theta_i \in \mathbb{Z}_p$ (obtained by hashing $\hat{C}$ and $\hat{C}_x$) and taking the product over all indices $i \in [\ell]$. This yields a proof $\pi_\theta = \prod_{i \in [\ell]} \pi_{\theta,i}^{\theta_i} \in \mathbb{G}$ satisfying

$$\frac{e(\prod_{i=1}^{\ell} g_{n+1-i}^{\theta_i} \cdot g_{n+1-i-\ell}^{-\theta_i}, \hat{C}_x)}{e(\prod_{i=1}^{\ell} g_{n+1-i}^{\theta_i}, \hat{C})} = e(\pi_\theta, \hat{g}) \qquad (27)$$

which provides evidence that $\mathbf{x} = \mathbf{x}_0 - \mathbf{x}_1$. Indeed, if there exists $i \in [\ell]$ such that (26) does not hold for some $\pi_{\theta,i}$ computable by the prover, then (27) holds with probability $1/p$ as long as the coefficients $(\theta_1, \dots, \theta_\ell)$ are chosen after $\hat{C}$ and $\hat{C}_x$. The final proof $\pi = (\hat{C}_x, \hat{C}_y, \pi)$ that $\mathbf{x} \in \{-1,0,1\}^\ell$ comprises the commitment $C_x$ and a pair $(C_y, \pi) \in \mathbb{G}^2$, where $\pi$ is an aggregation of $\pi_\theta$ with the proof that $\hat{C}_x$ commits to a binary vector.

**Proving exact Hamming weights for binary vectors.**

For a commitment $\hat{C} = \hat{g}^\gamma \cdot \prod_{j=1}^n \hat{g}_j^{x_j}$ to a binary $\mathbf{x} \in \{0,1\}^n$, we can also prove that x has a fixed Hamming weight. This is useful in the context of FHE, where secret keys are sometimes chosen with a special structure for efficiency reasons. To prove that a committed **x** has Hamming weight $k$, we can prove that: (i) **x** is binary; (ii) Its inner product with the all-one vector $(1,1, \dots,1)$ is exactly k. The preferred embodiment allows proving (i). In order to prove (ii), the prover can generate a short $\pi_k \in \mathbb{G}$ such that

$$e(\prod_{i=1}^n g_{n+1-i}, \hat{C}) = e(g_1, \hat{g}_n)^k \cdot e(\pi_k, \hat{g}), \qquad (28)$$

which is possible as in (2) since $k = \sum_{i=1}^n x_i$. Again, we can aggregate $\pi_k$ with other proof components to obtain a proof comprised of just one element of $\widehat{\mathbb{G}}$ and two elements of $\mathbb{G}$.

**Proving bounded Hamming weights for arbitrary vectors.**

We now consider the problem of proving small Hamming weights for an arbitrary $\mathbf{x} = (x_1, \dots, x_n) \in \mathbb{Z}_q^n$ committed as $\hat{C} = \hat{g}^\gamma \cdot \prod_{j=1}^n \hat{g}_j^{x_j}$. Using the additive homomorphic property of the commitment scheme, this also allows proving that two committed vectors are close in terms of Hamming distance.

To prove the statement, we first generate a commitment $C_w$ to a random vector $\mathbf{w} = (w_1, \dots, w_n) \in \{0,1\}^n$ of Hamming weight $HW(\mathbf{w}) = B$ for which $w_i = 1$ for all $i \in [n]$ such that $x_i \neq 0$. We can then prove that: (i) w is binary and has Hamming weight $B$; (ii) For each $i \in [n]$, $w_i = 1$ whenever $x_i \neq 0$, which implies $HW(\mathbf{x}) \leq HW(\mathbf{w})$.

We can prove (i) as explained in the previous paragraph. In order to prove (ii), we can prove that $\sum_{i=1}^n y_i \cdot (1 - w_i) \cdot x_i = 0$ for a random vector $\mathbf{y} = (y_1, \dots, y_n) \in \mathbb{Z}_p^n$. The latter condition ensures that $\forall i \in [n]: (x_i \neq 0) \Rightarrow (w_i = 1)$ with overwhelming probability $1 - 1/p$. Indeed, if there exists $i \in [n]$ such that $\bar{x}_i \neq 0$ and $w_i = 0$, we have $\sum_{i=1}^n y_i \cdot (1 - w_i) \cdot x_i = 0$ with negligible probability $1/p$ as long as $(y_1, \dots, y_n)$ is chosen randomly after w and x.

In more details, the prover computes an auxiliary commitment $C_w = g^{\gamma_w} \cdot \prod_{j=1}^n g_j^{w_i}$ to $\mathbf{w} \in \{0,1\}^n$, for some

random $\gamma_w \xleftarrow{R} \mathbb{Z}_p$ , and proves that $C_w$ is a commitment to a binary vector. Then, the prover generates another commitment $C_y = g^{\gamma_y} \cdot \prod_{i=1}^n g_{n+1-i}^{y_i \cdot w_i}$ and proves that it commits to the reversed Hadamard product $(y_n \cdot w_n, \ldots, y_1 \cdot w_1)$, where $(y_1, \ldots, y_n) = H(\hat{C}, C_w)$, by proceeding exactly as in the preferred embodiment. Next, the prover can generate a short $\pi_y \in \mathbb{G}$ such that

$$e(\prod_{i=1}^n g_{n+1-i}^{y_i} \cdot C_y^{-1}, \hat{C})$$
$$= e(\pi_y, \hat{g}) \cdot e(g_1, \hat{g}_n)^{\sum_{i=1}^n y_i \cdot (1-w_i) \cdot x_i} = e(\pi_y, \hat{g}), \qquad (29)$$

which is possible since $\prod_{i=1}^n g_{n+1-i}^{y_i} \cdot C_y^{-1} = g^{\gamma_y} \cdot \prod_{i=1}^n g_{n+1-i}^{y_i \cdot (1-w_i)}$ , so that the sum $\sum_{i=1}^n y_i \cdot (1 - w_i) \cdot x_i$ is the coefficient of $\alpha^{n+1}$ when we see the left-hand-side member of (29) as a product of univariate polynomials in the exponent.

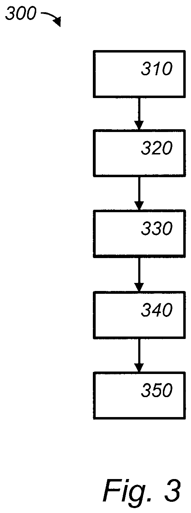

**Figure 3** schematically shows an example of an embodiment of a proving method 300. Method 300 may be computer-implemented. Method 300 demonstrates by a prover to a verifier that a main vector (**x** = $(x_1, \ldots, x_n)$) is a binary vector using a vector commitment scheme. Method 300 comprises

- computing (310) by a prover a main commitment ($\hat{C}$; $C$), the first commitment committing to the main vector (**x**),
- obtaining (320) by the prover a randomizing vector (**y** = $(y_1, \ldots, y_n)$). the randomizing vector being made available to the verifier,
- computing (330) by the prover a first auxiliary commitment ($C_y$; $\hat{C}_y$), the first auxiliary commitment committing, in reverse order, to an auxiliary vector comprising a Hadamard product of the main vector (x) and the randomizing vector (y),
- generating (340) a first proof ($\pi_y$) demonstrating that a further vector comprising the product of the randomizing vector and the main vector minus 1 in each component ($y_i(x_i - 1)$) is orthogonal to the main vector ($x_i$), the first proof being arranged for verification by a verifier. Optionally, method 300 further comprises
- generating (350) a second proof ($\pi_{eq}$) demonstrating that the main vector in the Hadamard product committed to in the first auxiliary commitment is the main vector committed to in the main commitment.

An aspect further concerns a cryptographic method for verifying by a verifier a proof generated according to any of the preceding claims.

For example, the verifying and demonstrating methods may be computer implemented methods. The vectors, proofs, and commitments may be represented by multiple bits. For example, the vectors may have at least 10, 100, 1000 vectors. For example, proofs, and commitments may be represented digitally in bits and may each comprise at least 100, at least 500, bits.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 300. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

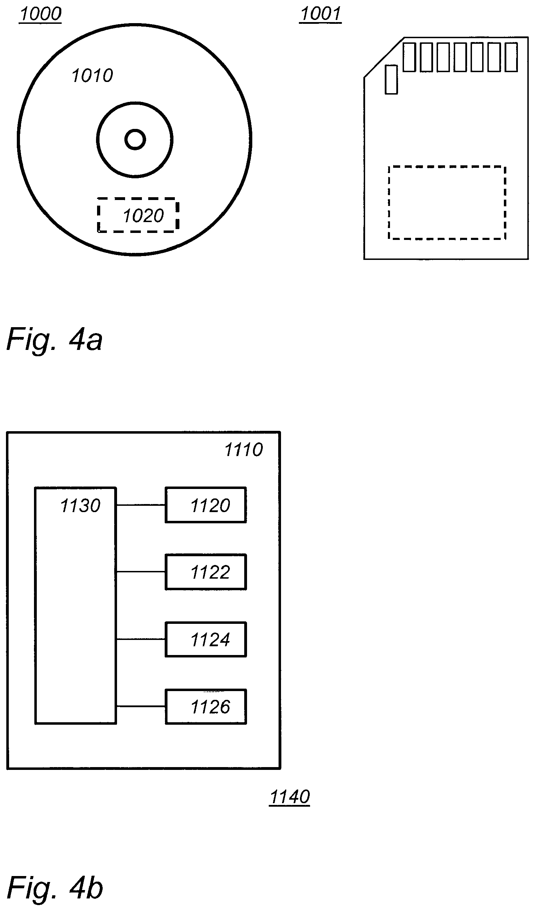

**Figure 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a demonstrating and/or verifying method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said demonstrating and/or verifying method.

**Figure 4b** shows in a schematic representation of a processor system 1140 according to an embodiment of a demonstrating and/or verifying system. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the demonstrating and/or verifying system may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic method (300) for demonstrating by a prover to a verifier that a main vector ($\mathbf{x} = (x_1, \dots, x_n)$) is a binary vector using a vector commitment scheme,

   - computing (310) by a prover a main commitment ($\hat{C}; C$), the first commitment committing to the main vector (x),
   - obtaining (320) by the prover a randomizing vector ($\mathbf{y} = (y_1, \dots, y_n)$). the randomizing vector being made available to the verifier,
   - computing (330) by the prover a first auxiliary commitment ($C_y; \hat{C}_y$), the first auxiliary commitment committing to, in reverse order as the main vector, an auxiliary vector comprising a Hadamard product of the main vector (**x**) and the randomizing vector (**y**),
   - generating (340) a first proof ($\pi_y$) demonstrating that a further vector comprising the product of the randomizing vector and the main vector minus 1 in each component ($y_i(x_i - 1)$ is orthogonal to the main vector ($x_i$), the first proof being arranged for verification by a verifier.

2. A method as in Claim 1, wherein

   - the main commitment ($\hat{C}; C$) is computed by evaluating a commitment function of the vector commitment scheme for the main vector (x), and/or
   - the auxiliary commitment ($\hat{C}; C$) is computed by evaluating a commitment function of the vector commitment scheme for the auxiliary vector, or a linear combination of the auxiliary vector and the randomizing vector, or for the auxiliary vector minus the randomizing vector.

3. A method as in any of the preceding claims, comprising

   - generating (350) a second proof ($\pi_{eq}$) demonstrating that the main vector in the Hadamard product committed to in the first auxiliary commitment is the main vector committed to in the main commitment.

4. A method as in Claim 3, wherein the commitment scheme is arranged to allow a partial opening for an element ($x_i$) at a position ($i \in [n]$) of a vector, the second proof comprising a product of proofs ranging over the indices in the main vector divided by a product of proofs ranging over the indices in the auxiliary vector.

5. A method as in any of the preceding claims, wherein the main commitment, the auxiliary commitment, the first proof and the second proof each have a size which is independent on the dimension of the main vector.

6. A method as in any of the preceding claims, wherein the vector commitment scheme is additively homomorphic.

7. A method as in any of the preceding claims, the verification further comprising obtaining a second auxiliary commitment ($C_y \cdot \prod_{j=1}^{n} g_{n+1-j}^{-y_j}$) from the first auxiliary commitment.

8. A method as in Claim 7, wherein the second auxiliary commitment is obtained from the first auxiliary commitment and the randomizing vector using an additive homomorphic property of the commitment scheme.

9. A method as in any of the preceding claims, wherein a bilinear map ($e(,)$ is defined from a first group and a second group ($\mathbb{G}, \widehat{\mathbb{G}}$) to a third group ($\mathbb{G}_T$), a vector commitment being an element in one of the first and second groups ($\widehat{\mathbb{G}}; \mathbb{G}$),

   - verification of the first proof comprising a first application of the bilinear map to the first proof and a generator of the second group ($e(\pi_y, \hat{g})$).

10. A method as in Claim 9, wherein verification of the first proof comprises a second application of the bilinear map ($e(C_y, \hat{C})$) to the main commitment and the auxiliary commitment, the verification comprises comparing the results of the first and second application in the third group.

**11.** A method as in Claim 10 and 7, wherein verification of the first proof comprises a second application of the bilinear map ( $e(C_y \cdot \prod_{j=1}^{n} g_{n+1-j}^{-y_j}, \hat{C})$ ) to the main commitment and the second auxiliary commitment, the verification comprises comparing the results of the first and second application in the third group.

**12.** A method as in Claim 9, Claim 3 and any of the preceding claims, wherein the second proof ( $\pi_{eq}$ ) is an element of the first group ( $\mathbb{G}$ ), the second proof being arranged for verification by a verifier, said verification comprising comparing applications of the bilinear map to the second proof ($e(\pi_{eq}, \hat{g})$), the main commitment ( $e(\prod_{i=1}^{n} g_{n+1-i}^{t_i \cdot y_i}, \hat{C})$ ), and the auxiliary commitment ( $e(C_y, \prod_{i=1}^{n} \hat{g}_i^{t_i})$ ) or a second auxiliary commitment derived from the auxiliary commitment and the randomization vector.

**13.** A method as in Claim 12, wherein the applications of the bilinear map are with products of selected group generators, wherein the group generators are selected for the comparison to balance if the main commitment and the first auxiliary commitment both correspond to the same main vector.

**14.** A method as in Claim 4, Claim 9 and any of the preceding claims, wherein

- the bilinear map applied to a selected group element of the first group and the main commitment ($e(g_{n+1-i}, \hat{C})$) equals in the third group the product of the bilinear map applied to an opening proof for an element at an index and a selected group element of the second group ($e(\pi_{x,i}, \hat{g})$) and the bilinear map applied to a selected group element of the first group and a selected element of the second group, raised to the value of the element at the index ($e(g_1, \hat{g}_n)^{x_i}$), and/or
- the bilinear map applied to the auxiliary commitment and a selected group element of the second group ($e(C_y, \hat{g}_i)$) equals in the third group the product of the bilinear map applied to an opening proof for an element at an index and a selected group element of the second group ($e(\varepsilon_{yx,i}, \hat{g})$) and the bilinear map applied to a selected group element of the first group and a selected element of the second group, raised to the value of the element at the index ($e(g_1, \hat{g}_n)^{y_i \cdot x_i}$).

**15.** A method as in any of the preceding claims, comprising

- making the commitment and the auxiliary commitment available to the verifier, and making the first proof and/or the second proof or an aggregation thereof available to the verifier.

**16.** A method as in any of the preceding claims, wherein the vector commitment scheme comprises a Pedersen commitment scheme.

**17.** A method for demonstrating that a number ($x$) is smaller than a threshold, comprising

- obtaining a bit vector comprising a bit representation (($x_1, \dots, x_\ell$) $\in \{0,1\}^\ell$) of the number ($x$) and computing a commitment for the vector, and generating at least the first proof according to any of the preceding claims,
- generating a proof demonstrating the equality of the bit vector to the number.

**18.** A method for demonstrating validity of a ring LWE ciphertext over a ring $R = \mathbb{Z}[X]/(\Phi)$, the ciphertext comprising a first vector $s = (s_1, \dots, s_M) \in R^M$, and a second vector $\mathbf{a}$, satisfying the equation $\sum_{i=1}^{M} \mathbf{a}_i \cdot s_i = \mathbf{t} \bmod(q, \Phi)$, for $\mathbf{t} \in R_q^N$ and $\mathbf{a}_1, \dots, \mathbf{a}_M \in R_q^N$, and $R_q = R/(qR)$ for an integer $q$, comprising representing vector s as a binary vector, generating at least a first proof as in any of claim 1-16, generating a proof that the vector s satisfies the equation.

**19.** A method for demonstrating a vector x is ternary, comprising write x as the difference $\mathbf{x} = \mathbf{x}_0 - \mathbf{x}_1$ between two binary vectors $\mathbf{x}_0, \mathbf{x}_1 \in \{0,1\}^\ell$ and generating at least a first proof as in any of claim 1-16, for the concatenated vector of the two binary vectors.

**20.** A cryptographic method for verifying by a verifier a proof generated according to any of the preceding claims.

21. A system comprising: one or more processors; and one or more storage devices storing instructions that, when executed by the one or more processors, cause the one or more processors to perform operations for a method according to any of the preceding claims.

22. A non-transitory computer storage medium encoded with instructions that, when executed by one or more computers, cause the one or more computers to perform operations according to any of claims 1-20.

100

| 110 |
|---|
| 113 |
| 114 |
| 115 |

| 120 |
|---|
| 123 |
| 124 |
| 125 |

Fig. 1

200

219

210 — 211 — 220 — 221
222
212
213 — 230 — 231
232

Fig. 2

*300*

```
      ┌──────────┐
      │   310    │
      └──────────┘
            │
            ▼
      ┌──────────┐
      │   320    │
      └──────────┘
            │
            ▼
      ┌──────────┐
      │   330    │
      └──────────┘
            │
            ▼
      ┌──────────┐
      │   340    │
      └──────────┘
            │
            ▼
      ┌──────────┐
      │   350    │
      └──────────┘
```

*Fig. 3*

1000      1001

1010

1020

## Fig. 4a

1110

1130    1120

1122

1124

1126

1140

## Fig. 4b

Europäisches
Patentamt

European
Patent Office

Office européen
des brevets

# EUROPEAN SEARCH REPORT

**Application Number**

EP 23 31 5023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THIBAULD FENEUIL ET AL: "Zero-Knowledge Protocols for the Subset Sum Problem from MPC-in-the-Head with Rejection", IACR, INTERNATIONAL ASSOCIATION FOR CRYPTOLOGIC RESEARCH , vol. 20221123:165319 23 November 2022 (2022-11-23), pages 1-51, XP061075772, Retrieved from the Internet: URL:https://eprint.iacr.org/archive/2022/223/1669222399.pdf [retrieved on 2022-11-23] | 1-3,6-8, 15,18, 20-22 | INV. H04L9/32 |
| A | * sections 3.2, 3.3 and 6.2 * | 4,5, 9-14,16, 17,19 | |
| A,D | BENOÎT LIBERT ET AL: "Functional Commitment Schemes: From Polynomial Commitments to Pairing-Based Accumulators from Simple Assumptions", IACR, INTERNATIONAL ASSOCIATION FOR CRYPTOLOGIC RESEARCH, vol. 20160810:204639, 9 August 2016 (2016-08-09), pages 1-26, XP061021546, [retrieved on 2016-08-09] * the whole document * | 1-22 | TECHNICAL FIELDS SEARCHED (IPC) H04L |

The present search report has been drawn up for all claims

| Place of search | Date of completion of the search | Examiner |
|---|---|---|
| Munich | 30 June 2023 | Manet, Pascal |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. KACHISA ; E. SCHAEFER ; M. SCOTT.** *Constructing Brezing-Weng pairing-friendly elliptic curves using elements in the cyclotomic field.*
- **D. ARANHA ; Y. EL HOUSNI ; A. GUILLEVIC.** *A survey of elliptic curves for proof systems.*
- **Y. EL HOUSNI ; A. GUILLEVIC.** *Optimized and secure pairing friendly elliptic curves suitable for one layer proof composition.*
- **STEVEN D. GALBRAITH et al.** *Pairings for cryptographers*
- **B. LIBERT ; M. YUNG.** *Concise Mercurial Vector Commitments and Independent Zero-Knowledge Sets with Short Proofs*
- **B. LIBERT ; S. RAMANNA ; M. YUNG.** *Functional Commitment Schemes: From Polynomial Commitments to Pairing-Based Accumulators from Simple Assumptions*
- **G. FUCHSBAUER ; E. KILTZ ; J. LOSS.** *The Algebraic Group Model and its Applications*
- **BENEDIKT BÜNZ et al.** *Bulletproofs: Short Proofs for Confidential Transactions and More*
- **B. LIBERT ; M. YUNG.** *Concise mercurial vector commitments and independent zero-knowledge sets with short proofs.*
- **VADIM LYUBASHEVSKY et al.** *On Ideal Lattices and Learning with Errors Over Rings*
- **SERGEY GORBUNOV et al.** *Pointproofs: Aggregating Proofs for Multiple Vector Commitments*